# EUROPÄISCHE PATENTANMELDUNG

(11) **EP 3 564 447 A1**
(43) Veröffentlichungstag der Anmeldung: **06.11.2019**
(21) Anmeldenummer: 18170871.0
(22) Anmeldetag: 04.05.2018
(51) Int. Cl.: E02F 5/12, E02F 5/22, B60P 1/36, E01C 19/20

(54) **SCHÜTTGUTTRANSPORTFAHRZEUG**

(71) Anmelder: Bergmann Maschinenbau GmbH & Co. KG, 49716 Meppen-Hüntel (DE)
(72) Erfinder: BERGMANN, Johannes Hermann, 49716 Meppen (DE)
(74) Vertreter: Bossmeyer, Jörg Peter

(57) **Zusammenfassung**

Schüttguttransportfahrzeug mit einem Fahrgestell (2), einem mit diesem verbundenen Fahrwerk und einem an dem Fahrgestell (2) um eine Hochachse (5) drehbar gelagerten Schüttgutbehälter (6), der einen Laderaum (12) zur Aufnahme von Schüttgut (15) und eine Austragsöffnung (13) zum Austragen des Schüttguts (15) aufweist, wobei der Schüttgutbehälter (6) eine Fördermaschine (11) aufweist, mittels welcher das Schüttgut (15) förderbar und durch die Austragsöffnung (13) hindurch austragbar ist.

## Beschreibung

Die Erfindung betrifft ein Schüttguttransportfahrzeug mit einem Fahrgestell, einem mit diesem verbundenen Fahrwerk und einem an dem Fahrgestell um eine Hochachse drehbar gelagerten Schüttgutbehälter, der einen Laderaum zur Aufnahme von Schüttgut und eine Austragsöffnung zum Austragen des Schüttguts aufweist.

Ein derartiges Schüttguttransportfahrzeug kann zum Auftragen von Schüttgut auf einen Untergrund entlang einer Strecke verwendet werden, wobei in den Laderaum des Schüttgutbehälters Schüttgut eingebracht wird, das Schüttguttransportfahrzeug neben dem Untergrund positioniert wird, der Schüttgutbehälter um die Hochachse in eine Austragsstellung gedreht wird, wonach der Schüttgutbehälter gekippt wird, wodurch das in den Laderaum eingebrachte Schüttgut in Richtung der Austragsöffnung rutscht und durch diese hindurch aus dem Schüttgutbehälter ausgetragen wird, sodass das Schüttgut auf den Untergrund aufgetragen wird, während das Schüttguttransportfahrzeug entlang der Strecke bewegt wird. Nachteilig an dieser Vorgehensweise ist, dass das Schüttgut nicht dosiert durch die Austragsöffnung hindurch aus dem Schüttgutbehälter ausgetragen werden kann, da beim Abkippen von Schüttgut unterschiedliche Bereiche des Schüttguts unterschiedlich schnell rutschen und/oder einige Bereiche des Schüttguts länger am Laderaumboden haften als andere Bereiche des Schüttguts. Somit ergibt sich über die Strecke eine undefinierte Verteilung von Schüttgut, sodass Nacharbeiten zur Erzielung einer definierten Verteilung des Schüttguts über die Strecke erforderlich sind.

Eine Aufgabe der Erfindung besteht somit insbesondere darin, mit einem Schüttguttransportfahrzeug ein dosiertes Austragen von Schüttgut durch die Austragsöffnung hindurch ermöglichen zu können.

Diese Aufgabe wird erfindungsgemäß durch ein Schüttguttransportfahrzeug nach Anspruch 1 gelöst. Bevorzugte Weiterbildungen der Erfindung sind in den Unteransprüchen und in der nachfolgenden Beschreibung gegeben.

Das eingangs genannte Schüttguttransportfahrzeug mit einem Fahrgestell, einem mit diesem verbundenen Fahrwerk und einem, insbesondere unmittelbar oder mittelbar, an dem Fahrgestell um eine Hochachse drehbar gelagerten Schüttgutbehälter, der einen Laderaum zur Aufnahme von Schüttgut und eine Austragsöffnung zum Austragen von Schüttgut oder des Schüttguts aufweist, ist erfindungsgemäß insbesondere dadurch weitergebildet, dass der Schüttgutbehälter eine Fördermaschine aufweist, mittels welcher, vorzugsweise in dem Laderaum vorgesehenes und/oder in diesen eingebrachtes, Schüttgut oder das, vorzugsweise in dem Laderaum vorgesehene und/oder in diesen eingebrachte, Schüttgut, insbesondere in Richtung der Austragsöffnung, förderbar und durch die Austragsöffnung hindurch, insbesondere aus dem Schüttgutbehälter, austragbar ist.

Mittels der Fördermaschine ist das Schüttgut, insbesondere in Richtung der Austragsöffnung, förderbar durch die Austragsöffnung hindurch austragbar, sodass der durch die Austragsöffnung hindurch ausgetragene Schüttgutstrom über die Fördergeschwindigkeit der Fördermaschine steuerbar ist. Somit ist das Schüttgut dosiert verteilbar und/oder dosiert durch die Austragsöffnung hindurch, insbesondere aus dem Schüttgutbehälter, austragbar. Ein Kippen des Schüttgutbehälters ist dafür insbesondere nicht erforderlich. Da der Schüttgutbehälter um die Hochachse drehbar ist, ist das Schüttgut insbesondere zu allen oder zu verschiedenen Seiten des Schüttguttransportfahrzeugs hin dosiert verteilbar und/oder dosiert durch die Austragsöffnung hindurch austragbar.

Bevorzugt ist oder wird Schüttgut oder das Schüttgut in dem oder den Laderaum einbringbar oder vorsehbar oder eingebracht oder vorgesehen. Das Schüttgut ist vorzugsweise Sand oder Kies oder Schotter. Bevorzugt ist oder wird das Schüttgut auf einen Untergrund, insbesondere entlang der oder einer Strecke, auftragbar oder aufgetragen. Der Untergrund erstreckt sich bevorzugt entlang der oder einer Strecke. Der Untergrund ist z.B. eben oder näherungsweise eben. Beispielsweise bildet oder umfasst der Untergrund eine Planfläche und/oder einen Teil einer Ebene oder einer Landschaft und/oder der Untergrund bildet oder umfasst z.B. den Grund oder den Boden eines Grabens oder einer Aufgrabung oder einer, vorzugsweise länglichen, Vertiefung. Bevorzugt verläuft der Graben oder die Aufgrabung oder die Vertiefung entlang der oder einer Strecke. Der Graben ist z.B. ein Rohrgraben oder ein Leitungsgraben. Vorzugsweise eignet sich das Schüttguttransportfahrzeug auch zum Verteilen von Schotter auf einer Gleisbaustelle und/oder zum Befüllen von Einsandtrichtern von Kabelpflügen und Grabenfräsen und/oder zum Erstellen von Bankett-Seitenräumen und/oder zum Verteilen von Futter in Ställen oder Laufställen. Vorteilhaft eignet sich das Schüttguttransportfahrzeug auch zum Transport von Schüttgut, beispielsweise zum Transport von Aushubmaterial oder von Bauschutt.

Dem Schüttguttransportfahrzeug ist bevorzugt eine Fahrzeuglängsrichtung zugeordnet. Die Fahrzeuglängsrichtung verläuft insbesondere in Richtung der Fahrzeuglängsachse des Schüttguttransportfahrzeugs. Vorteilhaft verläuft die Fahrtrichtung des Schüttguttransportfahrzeugs in Fahrzeuglängsrichtung und/oder in Richtung der Fahrzeuglängsachse. Bei der Fahrtrichtung handelt es sich vorzugsweise um die, insbesondere gewöhnliche, Vorwärtsfahrtrichtung des Schüttguttransportfahrzeugs. Dem Schüttguttransportfahrzeug ist bevorzugt eine Fahrzeugquerrichtung zugeordnet. Die Fahrzeugquerrichtung verläuft insbesondere in Richtung der Fahrzeugquerachse des Schüttguttransportfahrzeugs. Vorteilhaft verläuft die Fahrzeugquerrichtung quer zur Fahrzeuglängsrichtung. Dem Schüttguttransportfahrzeug ist bevorzugt eine Fahrzeughochrichtung zugeordnet. Die Fahrzeughochrichtung verläuft insbesondere in Richtung der Fahrzeughochachse des Schüttguttransportfahrzeugs. Vorteilhaft verläuft die Fahrzeughochrichtung quer zur Fahrzeuglängsrichtung und/oder quer zur Fahrzeugquerrichtung. Bevorzugt weist die Fahrzeughochrichtung, insbesondere von der Erdoberfläche aus gesehen, nach oben und/oder von der Erde weg. Vorzugsweise verläuft die Fahrzeughochrichtung senkrecht zur Erdoberfläche und/oder senkrecht zu einem Boden, auf dem das Schüttguttransportfahrzeug aufsteht. Die Hochachse verläuft bevorzugt in Fahrzeughochrichtung. Insbesondere verläuft die Hochachse in Richtung und/oder parallel zu der Fahrzeughochachse. Möglich ist auch, dass die Hochachse mit der Fahrzeughochachse zusammenfällt. Positionsangaben wie oberhalb, über, unterhalb oder unter beziehen sich insbesondere auf die Richtung der Hochachse und/oder auf die Richtung der Fahrzeughochachse und/oder auf die Fahrzeughochrichtung.

Das Schüttguttransportfahrzeug umfasst bevorzugt einen Fahrzeugantrieb, mittels welchem das Schüttguttransportfahrzeug, vorzugsweise in Fahrtrichtung, antreibbar und/oder bewegbar ist. Der Fahrzeugantrieb ist z.B. ein elektrischer Antrieb. Bevorzugt umfasst der Fahrzeugantrieb einen Verbrennungsmotor. Insbesondere ist das Schüttguttransportfahrzeug ein Kraftfahrzeug. Alternativ weist das Schüttguttransportfahrzeug z.B. keinen eigenen Antrieb auf. Beispielsweise ist das Schüttguttransportfahrzeug ein Anhänger.

Das Fahrgestell besteht bevorzugt aus Metall, insbesondere aus einem Eisenwerkstoff, wie z.B. Stahl. Das Fahrgestell ist oder umfasst vorzugsweise einen oder wenigstens einen Fahrzeugrahmen. Beispielsweise umfasst das Fahrgestell zwei oder mehrere Fahrzeugrahmen, die z.B. gelenkig miteinander verbunden sind.

Das Fahrwerk umfasst bevorzugt eine oder wenigstens eine Radaufhängung oder mehrere Radaufhängungen, mittels welcher oder welchen ein oder wenigstens ein Fahrzeugrad oder mehrere Fahrzeugräder mit dem Fahrgestell verbunden ist oder sind. Die Radaufhängung oder Radaufhängungen umfassen z.B. ein oder mehrere Fahrzeugachsen. Alternativ umfasst das Fahrwerk z.B. ein oder wenigstens ein Laufwerk oder Kettenlaufwerk oder mehrere Laufwerke oder Kettenlaufwerke.

Der Schüttgutbehälter ist bevorzugt ein, insbesondere nach oben und/oder in Fahrzeughochrichtung, offener Behälter. Vorzugsweise umfasst der Schüttgutbehälter einen Behälterboden und/oder Behälterwände und/oder einen Behälterinnenraum. Bevorzugt ist der Behälterinnenraum durch den Behälterboden und/oder die Behälterwände begrenzt. Beispielsweise ist der Behälterboden eben ausgebildet. Insbesondere umringen oder umrahmen die Behälterwände den Behälterinnenraum, vorzugsweise vollständig oder U-förmig. Der Schüttgutbehälter bildet bevorzugt einen formstabilen Körper. Vorzugsweise besteht der Schüttgutbehälter aus Metall, insbesondere aus einem Eisenwerkstoff, wie z.B. Stahl. Der Schüttgutbehälter ist beispielsweise eine Mulde. Vorteilhaft ist in den Schüttgutbehälter und/oder in den Laderaum Schüttgut oder das Schüttgut eingebracht oder einbringbar.

Der Behälterinnenraum umfasst oder bildet bevorzugt den Laderaum. Bevorzugt ist der Laderaum durch die Behälterwände begrenzt. Beispielsweise umringen oder umrahmen die Behälterwände den Behälterinnenraum, vorzugsweise vollständig oder U-förmig. Vorteilhaft umfasst der Schüttgutbehälter einen Laderaumboden. Insbesondere ist der Laderaum, vorzugsweise zusätzlich, durch den oder einen Laderaumboden begrenzt. Bevorzugt bildet die Fördermaschine den oder einen Laderaumboden des Laderaums. Gemäß einer ersten Variante entspricht der Behälterinnenraum dem Laderaum. Beispielsweise ist der Laderaum, insbesondere zusätzlich, durch den Behälterboden begrenzt und/oder der Behälterboden bildet z.B. den oder einen Laderaumboden des Laderaums. Bevorzugt bildet die Fördermaschine den Behälterboden. Gemäß einer zweiten Variante ist der Laderaum kleiner als der Behälterinnenraum. Beispielsweise ist die Fördermaschine, vorzugsweise auf oder über dem Behälterboden, in dem Behälterinnenraum angeordnet. Insbesondere ist somit der von der Fördermaschine eingenommene Teil des Behälterinnenraums nicht als Laderaum nutzbar. Der Laderaumboden ist vorzugsweise eben ausgebildet.

Die Behälterwände umfassen bevorzugt zwei einander gegenüberliegende Seitenwände und eine Stirnwand. Vorzugsweise ist die Austragsöffnung der Stirnwand gegenüberliegend zwischen den Seitenwänden vorgesehen. Die Austragsöffnung ist insbesondere eine freie Öffnung. Beispielsweise umfassen die Behälterwände zusätzlich eine der Stirnwand gegenüberliegende Abschlusswand. In diesem Fall ist die Austragsöffnung vorzugsweis in oder unterhalb oder oberhalb der Abschlusswand vorgesehen. Alternativ ist die Austragsöffnung z.B. durch die Abschlusswand verschlossen. In diesem Fall ist die Austragsöffnung insbesondere durch die Abschlusswand freigebbar. Beispielsweise ist die Abschlusswand zum Freigeben der Austragsöffnung bewegbar, verschwenkbar, verschiebbar oder von dem Schüttgutbehälter abnehmbar. Der Behälterinnenraum und/oder der Laderaum ist z.B. durch die Abschlusswand, insbesondere zusätzlich, begrenzt. Die Seitenwände verlaufen z.B. parallel oder keilförmig zueinander. Insbesondere weisen die Seitenwände einen Abstand zueinander auf. Vorteilhaft weisen die Stirnwand und die Austragsöffnung einen Abstand zueinander auf. Die Stirnwand erstreckt sich bevorzugt an einem ersten Ende der Seitenwände zwischen den Seitenwänden. Insbesondere verläuft die Stirnwand quer zu den Seitenwänden. Die Austragsöffnung und/oder die Abschlusswand erstreckt sich bevorzugt an einem dem ersten Ende gegenüberliegenden zweiten Ende der Seitenwände zwischen den Seitenwänden. Insbesondere verläuft die Austragsöffnung und/oder die Abschlusswand quer zu den Seitenwänden.

Dem Schüttgutbehälter ist bevorzugt eine Behälterlängsrichtung zugeordnet. Insbesondere verläuft die Behälterlängsrichtung in Richtung der Seitenwände und/oder die Stirnwand und die Austragsöffnung liegen z.B. in Behälterlängsrichtung einander gegenüber und/oder die Stirnwand und die Abschlusswand liegen z.B. in Behälterlängsrichtung einander gegenüber. Insbesondere verläuft die Förderrichtung der Fördermaschine in Behälterlängsrichtung. Dem Schüttgutbehälter ist bevorzugt eine Behälterquerrichtung zugeordnet. Die Behälterquerrichtung verläuft insbesondere quer zur Behälterlängsrichtung. Vorteilhaft liegen die Behälterseitenwände in Behälterquerrichtung einander gegenüber. Dem Schüttgutbehälter ist bevorzugt eine Behälterhochrichtung zugeordnet. Die Behälterhochrichtung verläuft insbesondere quer zur Behälterlängsrichtung und/oder quer zur Behälterquerrichtung. Vorzugsweise verläuft die Behälterhochrichtung in Richtung der Hochachse und/oder in Richtung der Fahrzeughochachse und/oder in Fahrzeughochrichtung. Bevorzugt liegen die Seitenwände, insbesondere zumindest bereichsweise, auf zwei sich schneidenden Ebenen, deren Schnittgerade in Behälterlängsrichtung verläuft. Vorzugsweise verläuft die Schnittgerade unterhalb des Behälterbodens und/oder des Laderaumbodens.

Bevorzugt sind die Abmessungen des Schüttgutbehälters in Behälterlängsrichtung größer als die Abmessungen des Schüttgutbehälters in Behälterquerrichtung. Der Schüttgutbehälter weist vorzugsweise eine Länge auf, die größer ist als die Breite des Schüttgutbehälters. Die Länge des Schüttgutbehälters verläuft bevorzugt in Behälterlängsrichtung und die Breite des Schüttgutbehälters verläuft bevorzugt in Behälterquerrichtung.

Dadurch, dass der Schüttgutbehälter um die Hochachse drehbar an dem Fahrgestell gelagert ist, ist z.B. Schüttgut oder das Schüttgut seitlich vom Schüttguttransportfahrzeug durch die Austragsöffnung hindurch, insbesondere aus dem Schüttgutbehälter, austragbar, beispielsweise während das Schüttguttransportfahrzeug, vorzugsweise entlang der oder einer Strecke und/oder in Fahrtrichtung, fährt und/oder bewegt wird. Der Ausdruck "seitlich vom Schüttguttransportfahrzeug" bedeutet insbesondere in oder entgegen der Fahrzeugquerrichtung und/oder quer zur Fahrzeuglängsrichtung neben dem Schüttguttransportfahrzeug.

Bevorzugt ist dem Schüttgutbehälter, insbesondere bezüglich der Hochachse und/oder bezüglich einer Drehung oder Verdrehung oder Drehstellung um die Hochachse, eine Neutralstellung zugeordnet. In der oder einer Neutralstellung des Schüttgutbehälters verläuft die Behälterlängsrichtung vorzugsweise in Fahrzeuglängsrichtung und/oder in Fahrtrichtung. Vorteilhaft ist in der Neutralstellung die Austragsöffnung an einem fahrzeuglängsrichtungsseitigen Ende des Schüttguttransportfahrzeugs angeordnet, beispielsweise an einem vorderen Ende oder an einem hinteren Ende des Schüttguttransportfahrzeugs. Vorteilhaft ist dem Schüttgutbehälter, insbesondere bezüglich der Hochachse und/oder bezüglich einer Drehung oder Verdrehung oder Drehstellung um die Hochachse, eine Beladestellung zugeordnet. Vorzugsweise entspricht die Beladestellung der Neutralstellung. Bevorzugt ist dem Schüttgutbehälter, insbesondere bezüglich der Hochachse und/oder bezüglich einer Drehung oder Verdrehung oder Drehstellung um die Hochachse, eine Austragsstellung zugeordnet. In der oder einer Austragsstellung des Schüttgutbehälters verläuft die Behälterlängsrichtung vorzugsweise quer oder schräg zur Fahrzeuglängsrichtung und/oder quer oder schräg zur Fahrtrichtung. Somit ist in der Austragsstellung Schüttgut oder das Schüttgut z.B. seitlich vom Schüttguttransportfahrzeug durch die Austragsöffnung hindurch, insbesondere aus dem Schüttgutbehälter, austragbar. Der Ausdruck "seitlich vom Schüttguttransportfahrzeug" bedeutet insbesondere in oder entgegen der Fahrzeugquerrichtung und/oder quer zur Fahrzeuglängsrichtung neben dem Schüttguttransportfahrzeug. Bevorzugt ist der Schüttgutbehälter durch Drehen um die Hochachse von der Neutralstellung und/oder von der Beladestellung in die Austragsstellung überführbar. Vorzugsweise ist der Schüttgutbehälter durch Drehen oder Zurückdrehen um die Hochachse von der Austragsstellung in die Neutralstellung und/oder in die Beladestellung überführbar. In der Neutralstellung des Schüttgutbehälters weist das Schüttguttransportfahrzeug insbesondere bessere oder stabilere Fahreigenschaften als in der Austragsstellung des Schüttgutbehälters auf, sodass in einem reinen Fahrbetrieb des Schüttguttransportfahrzeugs der Schüttgutbehälter bevorzugt die Neutralstellung aufweist. Vorzugsweise ist es aber auch möglich, Schüttgut in der Neutralstellung und/oder in der Beladestellung auszutragen.

Bevorzugt ist der Schüttgutbehälter stufenlos um die Hochachse drehbar. Insbesondere ist der Schüttgutbehälter um oder um wenigstens 270° um die Hochachse drehbar. Vorzugsweise ist der Schüttgutbehälter mittels eines Behälterdrehlagers um die Hochachse drehbar an dem Fahrgestell gelagert. Das Behälterdrehlager ist oder umfasst z.B. eine Drehplatte. Vorteilhaft ist ein Behälterdrehantrieb vorgesehen, mittels welchem der Schüttgutbehälter um die Hochachse drehbar ist. Bevorzugt ist der Schüttgutbehälter mittels des Behälterdrehantriebs von der Neutralstellung und/oder von der Beladestellung in die Austragsstellung überführbar und/oder von der Austragsstellung in die Neutralstellung und/oder in die Beladestellung überführbar. Der Behälterdrehantrieb ist z.B. ein elektrischer oder ein pneumatischer Antrieb. Bevorzugt ist der Behälterdrehantrieb aber ein hydraulischer Antrieb. Ein hydraulischer Antrieb baut in der Regel kleiner als ein elektrischer Antrieb vergleichbarer Leistung. Ferner sind pneumatische Antriebe im Vergleich zu hydraulischen Antrieben in der Regel relativ leistungsschwach. Insbesondere umfasst das Schüttguttransportfahrzeug den Behälterdrehantrieb.

Der Schüttgutbehälter ist vorzugsweise, insbesondere mittels eines Hubantriebs, relativ zu dem Fahrgestell in Fahrzeughochrichtung und/oder in Behälterhochrichtung und/oder in Richtung der Hochachse verschiebbar. Der Hubantrieb ist z.B. durch den Behälterdrehantrieb gebildet oder umgekehrt. Beispielsweise ist der Schüttgutbehälter, insbesondere mittels eines Kippantriebs, relativ zu dem Fahrgestell kippbar. Der Kippantrieb ist z.B. durch den Behälterdrehantrieb oder durch den Hubantrieb gebildet oder umgekehrt. Alternativ ist der Schüttgutbehälter z.B. nicht kippbar und/oder nicht in Fahrzeughochrichtung und/oder in Behälterhochrichtung und/oder in Richtung der Hochachse verschiebbar.

Die Fördermaschine umfasst bevorzugt einen Fördermaschinenantrieb, mittels welchem die Fördermaschine antreibbar ist. Der Fördermaschinenantrieb ist z.B. ein elektrischer, ein pneumatischer oder ein hydraulischer Antrieb.

Gemäß einer Ausgestaltung ist eine mit der Fördermaschine verbundene Steuervorrichtung vorgesehen, mittels welcher die Fördergeschwindigkeit der Fördermaschine steuerbar ist. Somit ist es z.B. möglich, für unterschiedliche Fahrgeschwindigkeiten unterschiedliche Fördergeschwindigkeiten einzustellen oder vorzugeben. Der Fördermaschinenantrieb ist bevorzugt mittels der Steuervorrichtung steuerbar und/oder mit der Steuervorrichtung verbunden. Insbesondere umfasst das Schüttguttransportfahrzeug die Steuervorrichtung. Die Steuervorrichtung umfasst bevorzugt einen oder wenigstens einen Analogrechner und/oder Digitalrechner. Vorteilhaft umfasst die Steuervorrichtung einen oder wenigstens einen Mikrocontroller. Bevorzugt umfasst die Steuervorrichtung einen oder wenigstens einen Speicher. Der eine oder wenigstens eine Speicher ist oder umfasst z.B. einen oder wenigstens einen elektrischen und/oder einen oder wenigstens einen elektronischen und/oder einen oder wenigstens einen magnetischen und/oder einen oder wenigstens einen elektrostatischen und/oder einen oder wenigstens einen optischen Speicher. Vorzugsweise ist die Steuervorrichtung eine elektrische und/oder eine elektronische Steuervorrichtung.

Gemäß einer Weiterbildung ist mittels der Steuervorrichtung die Fördergeschwindigkeit der Fördermaschine in Abhängigkeit von der Fahrgeschwindigkeit des Schüttguttransportfahrzeugs steuerbar. Somit ist z.B. eine definierte Verteilung von ausgetragenem Schüttgut entlang der oder einer Strecke erzielbar. Vorzugsweise ist die Steuervorrichtung, beispielsweise elektrisch, mit einer Fahrgeschwindigkeitserfassungsvorrichtung verbunden, mittels welcher die Fahrgeschwindigkeit erfassbar ist. Bevorzugt ist bei einer Änderung der Fahrgeschwindigkeit die Fördergeschwindigkeit mittels der Steuervorrichtung, vorzugsweise in dieselbe Richtung, änderbar. Der Ausdruck "in dieselbe Richtung" bedeutet hierbei insbesondere, dass bei einer Erhöhung der Fahrgeschwindigkeit die Fördergeschwindigkeit erhöhbar und bei einer Verringerung der Fahrgeschwindigkeit die Fördergeschwindigkeit verringerbar ist. Bevorzugt ist mittels der Steuervorrichtung die Fördergeschwindigkeit der Fördermaschine in Abhängigkeit von der Fahrgeschwindigkeit des Schüttguttransportfahrzeugs derart steuerbar, dass bei einer Änderung der Fahrgeschwindigkeit das Vorzeichen des Gradienten der Fördergeschwindigkeit dem Vorzeichen des Gradienten der Fahrgeschwindigkeit entspricht. Beispielsweise ist mittels der Steuervorrichtung die Fördergeschwindigkeit der Fördermaschine linear oder proportional zu der Fahrgeschwindigkeit des Schüttguttransportfahrzeugs steuerbar. Die Fahrgeschwindigkeitserfassungsvorrichtung bildet oder umfasst z.B. ein Fahrgeschwindigkeitsmessgerät und/oder ein Drehzahlmessgerät und/oder einen Drehzahlsensor und/oder einen Encoder und/oder einen Geschwindigkeitssensor. Insbesondere umfasst das Schüttguttransportfahrzeug und/oder die Steuervorrichtung die Fahrgeschwindigkeitserfassungsvorrichtung.

Gemäß einer Ausgestaltung ist mittels der Steuervorrichtung die Fördermaschine und/oder die Fördergeschwindigkeit der Fördermaschine, vorzugsweise zusätzlich, in Abhängigkeit von einem oder wenigstens einem Vorgabewert oder von mehreren Vorgabewerten steuerbar. Beispielsweise ist der oder der wenigstens eine Vorgabewert oder sind die Vorgabewerte, vorzugsweise mittels einer mit der Steuervorrichtung, z.B. elektrisch, verbundenen Eingabevorrichtung, der Steuervorrichtung zuführbar oder in der Steuervorrichtung gespeichert. Bevorzugt ist der oder der wenigstens eine Vorgabewert oder sind die Vorgabewerte in die oder mittels der Eingabevorrichtung eingebbar. Insbesondere umfasst das Schüttguttransportfahrzeug und/oder die Steuervorrichtung die Eingabevorrichtung. Beispielsweise ist die Eingabevorrichtung in einem Fahrerstand oder in einer Fahrerkabine des Schüttguttransportfahrzeugs angeordnet. Bevorzugt umfasst die Eingabevorrichtung eine Tastatur und/oder eine oder mehrere Schalter und/oder ein oder mehrere Eingabegeräte. Vorteilhaft umfasst die Eingabevorrichtung einen Bildschirm zum Anzeigen des oder des wenigstens einen Vorgabewerts oder der Vorgabewerte. Somit ist die Eingabe z.B. durch eine Bedienperson verifizierbar.

Gemäß einer ersten Möglichkeit ist der oder einer der Vorgabewerte z.B. ein Fördergeschwindigkeits-Vorgabewert. Der Fördergeschwindigkeits-Vorgabewert definiert insbesondere eine vorgegebene Fördergeschwindigkeit der Fördermaschine, vorzugsweise bei einer vorgegebenen Fahrgeschwindigkeit des Schüttguttransportfahrzeugs. Bevorzugt ist die Fördermaschine und/oder die Fördergeschwindigkeit der Fördermaschine mittels der Steuervorrichtung in Abhängigkeit von dem Fördergeschwindigkeits-Vorgabewert derart steuerbar, dass, vorzugsweise bei der vorgegebenen Fahrgeschwindigkeit des Schüttguttransportfahrzeugs, die Fördergeschwindigkeit der Fördermaschine dem Fördergeschwindigkeits-Vorgabewert entspricht. Weicht die Fahrgeschwindigkeit des Schüttguttransportfahrzeugs von der vorgegebenen Fahrgeschwindigkeit ab, ist die Fördergeschwindigkeit der Fördermaschine bevorzugt in, beispielsweise linearer oder proportionaler, Abhängigkeit von der Fahrgeschwindigkeit des Schüttguttransportfahrzeugs steuerbar.

Gemäß einer zweiten Möglichkeit ist der oder einer der Vorgabewerte z.B. ein Massenstrom-Vorgabewert. Der Massenstrom-Vorgabewert definiert insbesondere einen durch die Austragsöffnung hindurch ausgetragenen Schüttgutmassenstrom, vorzugsweise bei der oder einer vorgegebenen Fahrgeschwindigkeit des Schüttguttransportfahrzeugs. Bevorzugt ist die Fördermaschine und/oder die Fördergeschwindigkeit der Fördermaschine mittels der Steuervorrichtung in Abhängigkeit von dem Massenstrom-Vorgabewert derart steuerbar, dass, vorzugsweise bei der vorgegebenen Fahrgeschwindigkeit des Schüttguttransportfahrzeugs, der durch die Austragsöffnung hindurch ausgetragene Schüttgutmassenstrom dem Massenstrom-Vorgabewert entspricht. Weicht die Fahrgeschwindigkeit des Schüttguttransportfahrzeugs von der vorgegebenen Fahrgeschwindigkeit ab, ist der durch die Austragsöffnung hindurch ausgetragene Schüttgutmassenstrom, insbesondere durch Steuern der Fördergeschwindigkeit der Fördermaschine mittels der Steuervorrichtung, bevorzugt in, beispielsweise linearer oder proportionaler, Abhängigkeit von der Fahrgeschwindigkeit des Schüttguttransportfahrzeugs steuerbar.

Gemäß einer dritten Möglichkeit ist der oder einer der Vorgabewerte z.B. ein Volumenstrom-Vorgabewert. Der Volumenstrom-Vorgabewert definiert insbesondere den durch die Austragsöffnung hindurch ausgetragenen Schüttgutvolumenstrom, vorzugsweise bei der oder einer vorgegebenen Fahrgeschwindigkeit des Schüttguttransportfahrzeugs. Bevorzugt ist die Fördermaschine und/oder die Fördergeschwindigkeit der Fördermaschine mittels der Steuervorrichtung in Abhängigkeit von dem Volumenstrom-Vorgabewert derart steuerbar, dass, vorzugsweise bei der vorgegebenen Fahrgeschwindigkeit des Schüttguttransportfahrzeugs, der durch die Austragsöffnung hindurch ausgetragene Schüttgutvolumenstrom dem Volumenstrom-Vorgabewert entspricht. Weicht die Fahrgeschwindigkeit des Schüttguttransportfahrzeugs von der vorgegebenen Fahrgeschwindigkeit ab, ist der durch die Austragsöffnung hindurch ausgetragene Schüttgutvolumenstrom, insbesondere durch Steuern der Fördergeschwindigkeit der Fördermaschine mittels der Steuervorrichtung, bevorzugt in, beispielsweise linearer oder proportionaler, Abhängigkeit von der Fahrgeschwindigkeit des Schüttguttransportfahrzeugs steuerbar.

Gemäß einer vierten Möglichkeit ist der oder einer der Vorgabewerte z.B. ein Höhen-Vorgabewert. Der Höhen-Vorgabewert definiert insbesondere die Höhe eines, vorzugsweise auf dem oder einem Untergrund, durch das durch die Austragsöffnung hindurch ausgetragene Schüttgut angehäuften Schüttguthaufens. Bevorzugt ist die Fördermaschine und/oder die Fördergeschwindigkeit der Fördermaschine mittels der Steuervorrichtung in Abhängigkeit von dem Höhen-Vorgabewert derart steuerbar, dass durch das durch die Austragsöffnung hindurch ausgetragene Schüttgut, insbesondere auf dem oder einem Untergrund, ein Schüttguthaufen mit einer Höhe anhäufbar ist oder angehäuft wird, die dem Höhen-Vorgabewert entspricht. Vorteilhaft ist die Fördermaschine und/oder die Fördergeschwindigkeit der Fördermaschine mittels der Steuervorrichtung in Abhängigkeit von der Fahrgeschwindigkeit des Schüttguttransportfahrzeugs und in Abhängigkeit von dem Höhen-Vorgabewert derart steuerbar, dass durch das durch die Austragsöffnung hindurch ausgetragene Schüttgut, insbesondere auf dem oder einem Untergrund, ein Schüttguthaufen mit einer Höhe anhäufbar ist oder angehäuft wird, die dem Höhen-Vorgabewert entspricht.

Vorzugsweise sind ein oder mehrere der Vorgabewerte und/oder ein oder mehrere andere der Vorgabewerte ein oder mehrere Schüttgutbeschaffenheits-Vorgabewerte. Der oder die Schüttgutbeschaffenheits-Vorgabewerte repräsentieren insbesondere die Beschaffenheit des Schüttguts und umfassen bevorzugt einen oder mehrere die Beschaffenheit des Schüttguts charakterisierende Parameter, wie z.B. die Dichte und/oder die Rieselfähigkeit des Schüttguts. Beispielsweise umfasst oder umfassen der oder die Schüttgutbeschaffenheits-Vorgabewerte, vorzugsweise zusätzlich, einen oder wenigstens einen Anhäufungsparameter, der das Anhäufungsverhalten des Schüttguts, insbesondere auf dem oder einem Untergrund und/oder nach dem oder beim Austragen des Schüttguts aus der Austragsöffnung, charakterisiert. Der oder der wenigstens eine Anhäufungsparameter ist z.B. durch Versuche oder Vorversuche ermittelbar.

Gemäß der dritten Möglichkeit ist die Fördermaschine und/oder die Fördergeschwindigkeit der Fördermaschine mittels der Steuervorrichtung bevorzugt in Abhängigkeit von dem Volumenstrom-Vorgabewert und dem oder den Schüttgutbeschaffenheits-Vorgabewerten derart steuerbar, dass, vorzugsweise bei der vorgegebenen Fahrgeschwindigkeit des Schüttguttransportfahrzeugs, der durch die Austragsöffnung hindurch ausgetragene Schüttgutvolumenstrom dem Volumenstrom-Vorgabewert entspricht.

Gemäß der vierten Möglichkeit ist die Fördermaschine und/oder die Fördergeschwindigkeit der Fördermaschine mittels der Steuervorrichtung bevorzugt in Abhängigkeit von dem Höhen-Vorgabewert und dem oder den Schüttgutbeschaffenheits-Vorgabewerten derart steuerbar, dass durch das durch die Austragsöffnung hindurch ausgetragene Schüttgut, insbesondere auf dem oder einem Untergrund, ein Schüttguthaufen mit einer Höhe anhäufbar ist oder angehäuft wird, die dem Höhen-Vorgabewert entspricht.

Gemäß einer Weiterbildung ist mittels der Steuervorrichtung die Fördermaschine und/oder die Fördergeschwindigkeit der Fördermaschine regelbar. Vorzugsweise ist die Steuervorrichtung mit einer Fördergeschwindigkeitserfassungsvorrichtung, beispielsweise elektrisch, verbunden, mittels welcher die Fördergeschwindigkeit der Fördermaschine erfassbar ist. Die Fördergeschwindigkeitserfassungsvorrichtung ist z.B. an der Fördermaschine und/oder an dem Fördermaschinenantrieb vorgesehen. Die Fördergeschwindigkeitserfassungsvorrichtung bildet oder umfasst z.B. ein Geschwindigkeitsmessgerät und/oder ein Drehzahlmessgerät und/oder einen Drehzahlsensor und/oder einen Encoder und/oder einen Geschwindigkeitssensor. Insbesondere umfasst das Schüttguttransportfahrzeug und/oder die Steuervorrichtung die Fördergeschwindigkeitserfassungsvorrichtung.

Bevorzugt umfasst die Bedeutung des Begriffs Steuern oder steuerbar oder gesteuert auch die Bedeutung von Regeln oder regelbar oder geregelt.

Gemäß einer Ausgestaltung ist mittels der Steuervorrichtung die Fördergeschwindigkeit in Abhängigkeit oder zusätzlich in Abhängigkeit von der in den Laderaum eingebrachten Schüttgutmenge steuerbar. Somit ist es z.B. möglich, beim Steuern der Fördergeschwindigkeit den Beladungszustand des Schüttgutbehälters zu berücksichtigen. Bevorzugt ist die Steuervorrichtung, beispielsweise elektrisch, mit einer Beladungszustanderfassungsvorrichtung verbunden, mittels welcher die in den Laderaum eingebrachte Schüttgutmenge erfassbar ist. Vorzugsweise ist oder umfasst die Beladungszustanderfassungsvorrichtung eine oder wenigstens eine Waage, mittels welcher das Gewicht des in den Laderaum eingebrachten Schüttguts erfassbar ist. Aus dem Gewicht des in den Laderaum eingebrachten Schüttguts kann z.B. die Masse des in den Laderaum eingebrachten Schüttguts bestimmt werden. Bei Kenntnis der Dichte des Schüttguts kann aus dem Gewicht des in den Laderaum eingebrachten Schüttguts insbesondere das Volumen des in den Laderaum eingebrachten Schüttguts bestimmt werden. Die oder die wenigstens eine Waage der Beladungszustanderfassungsvorrichtung umfasst z.B. einen oder wenigstens einen Kraftsensor. Insbesondere umfasst das Schüttguttransportfahrzeug und/oder die Steuervorrichtung die Beladungszustanderfassungsvorrichtung.

Bevorzugt ist, vorzugsweise an dem Schüttgutbehälter und/oder an der Fördermaschine, eine Austragskante vorgesehen. Vorteilhaft ist das Schüttgut im Bereich der Austragskante an die Umgebung abgebbar. Bei Erreichen oder Überschreiten der Austragskannte fällt oder rieselt das Schüttgut insbesondere nach unten, vorzugsweise auf den oder einen Untergrund. Beispielsweise ist die Austragskante durch eine Kante des Behälterbodens und/oder des Laderaumbodens, z.B. an oder im Bereich der Austragsöffnung, gebildet. Bevorzugt ist die Austragskante durch ein, vorzugsweise freies und/oder austragsöffnungsseitiges und/oder dem Schüttgutbehälter und/oder der Stirnwand abgewandtes, Ende der Fördermaschine, insbesondere in Behälterlängsrichtung und/oder in Förderrichtung, gebildet. Beispielsweise erstreckt sich die Fördermaschine, insbesondere in Behälterlängsrichtung und/oder in Förderrichtung, über den Schüttgutbehälter und/oder die Austragsöffnung hinaus. In diesem Fall liegt die Austragskante insbesondere außerhalb des Schüttgutbehälters.

Bevorzugt ist die Fördermaschine in oder mit einem, vorzugsweise die Austragskante umfassenden und/oder freien und/oder austragsöffnungsseitigen, Bereich oder Endbereich, insbesondere in Fahrzeughochrichtung und/oder in Behälterhochrichtung und/oder in Richtung der Hochachse und/oder um eine Fördermaschinen-Schwenkachse, schwenkbar. Die Fördermaschinen-Schwenkachse verläuft z.B. horizontal und/oder in Behälterquerrichtung. Durch Schwenken des Bereichs oder Endbereichs der Fördermaschine ist insbesondere die Entfernung zwischen der Austragskante und dem Schüttgutbehälter und somit z.B. die Förderlänge einstellbar und/oder variierbar. Ein Schwenken des Bereichs oder Endbereichs der Fördermaschine, vorzugsweise in Fahrzeughochrichtung und/oder in Behälterhochrichtung und/oder in Richtung der Hochachse, ist z.B. auch dann sinnvoll, wenn der Untergrund oder der vorgesehene Austragungsort in Fahrzeughochrichtung und/oder in Behälterhochrichtung und/oder in Richtung der Hochachse auf Höhe des oder über dem Laderaumboden liegt. Ergänzend oder alternativ ist durch ein Schwenken des Bereichs oder Endbereichs der Fördermaschine z.B. die Austragsöffnung durch den Bereich oder Endbereich der Fördermaschine verschließbar.

Bevorzugt ist die Fördermaschine, insbesondere in Behälterlängsrichtung und/oder in Förderrichtung der Fördermaschine, teleskopierbar, vorzugsweise derart, dass der Abstand der Austragskante zu dem Schüttgutbehälter, einstellbar und/oder variierbar ist. Somit ist es möglich, die Förderlänge der Fördermaschine zu verlängern und/oder zu verkürzen.

Gemäß einer Weiterbildung ist mittels der Steuervorrichtung die Fördergeschwindigkeit in Abhängigkeit oder zusätzlich in Abhängigkeit von der Schüttgutmenge im Bereich der Austragöffnung und/oder der Austragskante steuerbar. Somit ist es z.B. möglich, eine unterschiedliche Verteilung des Schüttguts im Laderaum zu berücksichtigen. Bevorzugt ist die Steuervorrichtung, beispielsweise elektrisch, mit einer Schüttgutmengenerfassungsvorrichtung verbunden, mittels welcher die Schüttgutmenge im Bereich der Austragöffnung und/oder der Austragskante erfassbar ist. Vorzugsweise ist oder umfasst die Schüttgutmengenerfassungsvorrichtung eine oder wenigstens eine Waage, mittels welcher das Gewicht des Schüttguts im Bereich der Austragöffnung und/oder der Austragskante erfassbar ist. Das Gewicht des Schüttguts im Bereich der Austragöffnung und/oder der Austragskante ist insbesondere ein Maß für die Schüttgutmenge im Bereich der Austragöffnung und/oder der Austragskante. Aus dem Gewicht des Schüttguts im Bereich der Austragöffnung und/oder der Austragskante kann z.B. die Masse des Schüttguts im Bereich der Austragöffnung und/oder der Austragskante bestimmt werden. Bei Kenntnis der Dichte des Schüttguts kann aus dem Gewicht des Schüttguts im Bereich der Austragöffnung und/oder der Austragskante insbesondere das Volumen des Schüttguts im Bereich der Austragöffnung und/oder der Austragskante bestimmt werden. Die oder die wenigstens eine Waage der Schüttgutmengenerfassungsvorrichtung umfasst z.B. einen oder wenigstens einen Kraftsensor. Die Schüttgutmengenerfassungsvorrichtung kann z.B. durch die Beladungszustanderfassungsvorrichtung gebildet sein oder umgekehrt. Insbesondere umfasst das Schüttguttransportfahrzeug und/oder die Steuervorrichtung die Schüttgutmengenerfassungsvorrichtung.

Die Fördermaschine umfasst z.B. einen oder wenigstens einen im Laderaum und/oder im Behälterinnenraum angeordneten und/oder durch eine der Behälterwände und/oder durch die Stirnwand gebildeten und in Förderrichtung der Fördermaschine verschiebbaren Schieber, mittels welchem das Schüttgut in Richtung der Austragsöffnung schiebbar und durch diese hindurch, insbesondere aus dem Schüttgutbehälter, austragbar ist. Da das Schüttgut beim Fördern durch den Schieber zusammengeschoben wird, kann es sich, insbesondere im Laderaum und/oder an der Austragsöffnung, auftürmen, was zu einem ungleichmäßigen Austrag des Förderguts durch die Austragsöffnung führen kann.

Gemäß einer Ausbildung umfasst der Schüttgutbehälter und/oder die Fördermaschine eine im Bereich der Austragsöffnung angeordnete, vorzugsweise zusätzliche, Dosiereinheit, mittels welcher Schüttgut oder das Schüttgut dosiert durch die Austragsöffnung hindurch austragbar ist. Die Dosiereinheit ist oder umfasst z.B. eine drehbare oder drehende Bürste und/oder eine Mitnehmerwelle und/oder eine Zellradschleuse. Beispielsweise umfasst die Fördermaschine den Schieber und die Dosiereinheit. Somit sind insbesondere die mit dem Schieber verbundenen Nachteile vermeidbar.

Gemäß einer vorteilhaften Ausgestaltung umfasst oder bildet die Fördermaschine einen oder wenigstens einen Gurtförderer und/oder die Fördermaschine ist z.B. durch einen oder wenigstens einen Gurtförderer gebildet. Insbesondere umfasst der oder der wenigstens eine Gurtförderer einen oder wenigstens einen Fördergurt. Bevorzugt bildet der oder der wenigstens eine Fördergurt des oder des wenigstens einen Gurtförderers den oder einen Laderaumboden des Laderaums. Somit kann ein Auftürmen des Schüttguts während des Förderns vermieden werden. Die oder die wenigstens eine Waage der Schüttgutmengenerfassungsvorrichtung ist oder umfasst z.B. eine oder wenigstens eine Bandwaage, die beispielsweise auch als Förderbandwaage bezeichnet wird.

Gemäß einer Weiterbildung ist eine Hilfsfördermaschine vorgesehen. Bevorzugt ist das durch die Austragsöffnung hindurch ausgetragene Schüttgut oder ein Teil desselben mittels der Hilfsfördermaschine aufnehmbar und/oder von dem Schüttgutbehälter wegförderbar. Vorteilhaft ist, insbesondere mittels der Fördermaschine, der Hilfsfördermaschine das durch die Austragsöffnung hindurch ausgetragene Schüttgut oder ein Teil desselben zuführbar. Vorzugsweise ist mittels der Hilfsfördermaschine das ihr zugeführte Schüttgut von dem Schüttgutbehälter wegförderbar. Bevorzugt ist, insbesondere mittels der Hilfsfördermaschine, das von der Hilfsfördermaschine aufgenommene und/oder das der Hilfsfördermaschine zugeführte Schüttgut an einem dem Schüttgutbehälter abgewandten Ende der Hilfsfördermaschine, vorzugsweise von der Hilfsfördermaschine, abgebbar und/oder auf den oder einen Untergrund auftragbar. Aufgrund örtlicher Gegebenheiten kann der Fall eintreten, dass das Schüttguttransportfahrzeug nicht nahe genug an den Untergrund oder einen vorgesehenen Austragsort herangeführt und somit die Austragsöffnung nicht über dem Untergrund oder dem vorgesehenen Austragungsort positioniert werden kann. In diesem Fall ist die Gesamtförderlänge für das Schüttgut durch die Hilfsfördermaschine über die Förderlänge der Fördermaschine hinaus verlängerbar. Vorzugsweise schließt sich die Hilfsfördermaschine, insbesondere in Förderrichtung der Fördermaschine, an die Fördermaschine an. Die Förderrichtung der Hilfsfördermaschine ist bevorzugt mit der Förderrichtung der Fördermaschine identisch oder zu dieser parallel oder gegenüber dieser, beispielsweise in Fahrzeughochrichtung und/oder in Behälterhochrichtung und/oder in Richtung der Hochachse, geneigt. Die Hilfsfördermaschine ist bevorzugt mittels der Steuervorrichtung steuerbar. Vorteilhaft ist die Fördergeschwindigkeit der Hilfsfördermaschine, vorzugsweise mittels der Steuervorrichtung, steuerbar und/oder an die Fördergeschwindigkeit der Fördermaschine anpassbar. Beispielsweise ist die Fördergeschwindigkeit der Hilfsfördermaschine gleich der oder größer als die Fördergeschwindigkeit der Fördermaschine. Ist die Fördergeschwindigkeit der Hilfsfördermaschine größer als die Fördergeschwindigkeit der Fördermaschine kann das Schüttgut z.B. genauer dosiert und/oder z.B. weiter von der Hilfsfördermaschine weg geworfen werden. Bevorzugt umfasst oder bildet die Hilfsfördermaschine einen oder wenigstens einen Gurtförderer und/oder die Hilfsfördermaschine ist z.B. durch einen oder wenigstens einen Gurtförderer gebildet. Insbesondere umfasst das Schüttguttransportfahrzeug die Hilfsfördermaschine. Bevorzugt ist die Hilfsfördermaschine am Fahrgestell und/oder am Schüttgutbehälter, vorzugsweise im Bereich des austragsöffnungsseitigen Endes des Schüttgutbehälters und/oder unterhalb der Fördermaschine, gelagert, befestigt oder geführt.

Die Hilfsfördermaschine umfasst bevorzugt einen Hilfsfördermaschinenantrieb, mittels welchem die Hilfsfördermaschine antreibbar ist. Der

Hilfsfördermaschinenantrieb ist z.B. ein elektrischer, ein pneumatischer oder ein hydraulischer Antrieb. Der Hilfsfördermaschinenantrieb ist bevorzugt mittels der Steuervorrichtung steuerbar.

Die Hilfsfördermaschine ist vorzugsweise relativ zu der Fördermaschine verlagerbar und/oder bewegbar und/oder schwenkbar und/oder verschiebbar und/oder positionierbar. Bevorzugt ist ein Positionierungsantrieb vorgesehen, mittels welchem die Hilfsfördermaschine, insbesondere relativ zu der Fördermaschine, verlagerbar und/oder bewegbar und/oder schwenkbar und/oder verschiebbar und/oder positionierbar ist. Der Positionierungsantrieb ist z.B. ein elektrischer, ein pneumatischer oder ein hydraulischer Antrieb. Der Positionierungsantrieb ist bevorzugt mittels der Steuervorrichtung steuerbar. Insbesondere umfasst das Schüttguttransportfahrzeug den Positionierungsantrieb.

Gemäß einer Ausgestaltung ist die Hilfsfördermaschine, insbesondere um eine Hilfsfördermaschinendrehachse, vorzugsweise am Fahrgestell oder am Schüttgutbehälter oder am austragsöffnungsseitigen Ende des Schüttgutbehälters, vorteilhaft im Bereich des austragsöffnungsseitigen Endes des Schüttgutbehälters, schwenkbar gelagert. Die Hilfsfördermaschinendrehachse verläuft z.B. in Fahrzeughochrichtung und/oder in Behälterhochrichtung und/oder in Richtung der Hochachse oder quer zur Fahrzeughochrichtung und/oder quer zur Behälterhochrichtung und/oder quer zur Richtung der Hochachse. Bevorzugt ist durch Schwenken der Hilfsfördermaschine die Förderrichtung der Hilfsfördermaschine gegenüber der Förderrichtung der Fördermaschine, beispielsweise in Fahrzeughochrichtung und/oder in Behälterhochrichtung und/oder in Richtung der Hochachse, neigbar oder die Förderrichtung der Hilfsfördermaschine an die Förderrichtung der Fördermaschine anpassbar. Bevorzugt ist die Hilfsfördermaschine mittels des Positionierungsantriebs schwenkbar. Die Neigung der Förderrichtung der Hilfsfördermaschine gegenüber der Förderrichtung der Fördermaschine bestimmt insbesondere die Entfernung zwischen dem dem Schüttgutbehälter abgewandten Ende der Hilfsfördermaschine und dem Schüttgutbehälter und somit z.B. die Gesamtförderlänge. Bevorzugt ist die Gesamtförderlänge und/oder die Entfernung zwischen dem dem Schüttgutbehälter abgewandten Ende der Hilfsfördermaschine und dem Schüttgutbehälter durch Schwenken der Hilfsfördermaschine einstellbar und/oder variierbar. Eine Neigung der Förderrichtung der Hilfsfördermaschine gegenüber der Förderrichtung der Fördermaschine in Fahrzeughochrichtung und/oder in Behälterhochrichtung und/oder in Richtung der Hochachse ist z.B. auch dann sinnvoll, wenn der Untergrund oder der vorgesehene Austragungsort in Fahrzeughochrichtung und/oder in Behälterhochrichtung und/oder in Richtung der Hochachse auf Höhe oder über der Fördermaschine liegt.

Gemäß einer Weiterbildung ist die Hilfsfördermaschine in Förderrichtung der Fördermaschine, insbesondere an dem Schüttgutbehälter und/oder an der Fördermaschine, verschiebbar geführt. Somit ist es möglich, die Gesamtförderlänge durch Verschieben oder Herausschieben der Hilfsfördermaschine zu verlängern. Bevorzugt ist die Hilfsfördermaschine mittels des Positionierungsantriebs, insbesondere in Förderrichtung der Fördermaschine, verschiebbar. Vorzugsweise ist die Hilfsfördermaschine unterhalb der Fördermaschine angeordnet.

Gemäß einer Ausgestaltung ist am austragsöffnungsseitigen Ende des Schüttgutbehälters und/oder an der Austragskante und/oder an einem dem Schüttgutbehälter abgewandten Ende der Hilfsfördermaschine eine oder wenigstens eine Rutsche befestigt. Bevorzugt ist der Rutsche das durch die Austragsöffnung hindurch ausgetragene Schüttgut oder ein Teil desselben, insbesondere mittels der Fördermaschine und/oder der Hilfsfördermaschine, zuführbar. Insbesondere ist mittels der Rutsche das ihr zugeführte Schüttgut von dem Schüttgutbehälter und/oder von der Hilfsfördermaschine wegführbar. Bevorzugt ist, insbesondere mittels der Rutsche, das der Rutsche zugeführte Schüttgut an einem dem Schüttgutbehälter und/oder der Fördermaschine und/oder der Hilfsfördermaschine abgewandten Ende der Rutsche, vorzugsweise von der Rutsche, abgebbar und/oder auf den oder einen Untergrund auftragbar. Beispielsweise ist mittels der Rutsche das ihr zugeführte Schüttgut lenkbar oder umlenkbar und/oder gerichtet abführbar.

Bevorzugt ist die Rutsche, insbesondere um eine Rutschendrehachse, schwenkbar an dem Schüttgutbehälter und/oder an der Austragskante und/oder an der Hilfsfördermaschine gelagert. Die Rutschendrehachse verläuft z.B. in Fahrzeughochrichtung und/oder in Behälterhochrichtung und/oder in Richtung der Hochachse oder quer zur Fahrzeughochrichtung und/oder quer zur Behälterhochrichtung und/oder quer zur Richtung der Hochachse. Durch ein Schwenken der Rutsche ist es z.B. möglich, das ihr zugeführte Schüttgut in eine gewünschte Richtung zu leiten. Ferner ist es z.B. möglich, die Rutsche in Fahrzeughochrichtung und/oder in Behälterhochrichtung und/oder in Richtung der Hochachse nach oben zu schwenken, wenn die Rutsche nicht benötigt wird.

Gemäß einer Weiterbildung sind ein Rollenträger für eine, insbesondere bewickelte, Leitungsrolle und eine Leitungsführungsvorrichtung vorgesehen, über oder durch welche von der Leitungsrolle abgewickelte Leitung, insbesondere seitlich des Schüttguttransportfahrzeugs, vorzugsweise auf dem oder einem, insbesondere seitlich des Schüttguttransportfahrzeugs gelegenen, Untergrund oder Schüttgutbett und/oder entlang der oder einer Strecke, ablegbar ist. Bevorzugt ist mittels der Rutsche die abgelegte Leitung, vorzugsweise entlang der Strecke, mit Schüttgut bedeckbar. Diese Rutsche wird insbesondere als

Bedeckungsrutsche bezeichnet. Der Ausdruck "seitlich des Schüttguttransportfahrzeugs" bedeutet insbesondere in oder entgegen der Fahrzeugquerrichtung und/oder quer zur Fahrzeuglängsrichtung neben dem Schüttguttransportfahrzeug. Somit ist es insbesondere in einem Arbeitsgang möglich, die Leitung zu verlegen und mittels der Rutsche oder Bedeckungsrutsche mit Schüttgut zu bedecken. Vorzugsweise ist die Rutsche oder Bedeckungsrutsche quer zur Förderrichtung der Fördermaschine oder der Hilfsfördermaschine und/oder in Behälterquerrichtung ausgerichtet. Bevorzugt ist, insbesondere somit, mittels der Rutsche oder Bedeckungsrutsche das ihr zugeführte Schüttgut über die, vorzugsweise bereits abgelegte, Leitung und/oder über einen bereits abgelegten Bereich der Leitung führbar. Die Leitung ist z.B. eine elektrische Leitung oder eine Rohrleitung. Insbesondere umfasst das Schüttguttransportfahrzeug den Rollenträger und/oder die Leitungsführungsvorrichtung. Vorzugsweise ist das Schüttguttransportfahrzeug entlang der Strecke bewegbar.

Bevorzugt trägt der Rollenträger die, insbesondere bewickelte, Leitungsrolle. Die bewickelte Leitungsrolle ist vorzugsweise mit der Leitung bewickelt. Darunter ist insbesondere zu verstehen, dass die Leitung auf die Leitungsrolle aufgewickelt ist. Bevorzugt ist der Rollenträger am Fahrgestell oder am Schüttgutbehälter befestigt und/oder angeordnet. Vorzugsweise ist die Leitungsführungsvorrichtung am Fahrgestell oder am Schüttgutbehälter befestigt und/oder angeordnet. Vorteilhaft ist die Leitungsführungsvorrichtung am austragsöffnungsseitigen Ende des Schüttgutbehälters und/oder an der Austragskante und/oder an dem dem Schüttgutbehälter abgewandten Ende der Hilfsfördermaschine angeordnet. Die Leitungsführungsvorrichtung umfasst z.B. eine Buchse oder Schlaufe oder Öse, durch welche die Leitung hindurchgeführt oder hindurchführbar ist. Bevorzugt sind die Leitungsführungsvorrichtung und die Rutsche oder Bedeckungsrutsche quer zur Förderrichtung der Fördermaschine oder der Hilfsfördermaschine und/oder in Behälterquerrichtung nebeneinander angeordnet.

Bevorzugt erstreckt sich die Rutsche oder Bedeckungsrutsche, vorzugsweise quer zur Förderrichtung der Fördermaschine oder der Hilfsfördermaschine und/oder in Behälterquerrichtung, lediglich über einen Bereich oder Teilbereich des austragsöffnungsseitigen Endes des Schüttgutbehälters und/oder der Austragskante und/oder des dem Schüttgutbehälter abgewandten Endes der Hilfsfördermaschine. Vorteilhaft weist das austragsöffnungsseitige Ende des Schüttgutbehälters und/oder die Austragskante und/oder das dem Schüttgutbehälter abgewandten Ende der Hilfsfördermaschine, vorzugsweise somit, einen von der Rutsche oder Bedeckungsrutsche freien Bereich auf. Der freie Bereich und die Rutsche oder Bedeckungsrutsche sind quer zur Förderrichtung der Fördermaschine oder der Hilfsfördermaschine und/oder in Behälterquerrichtung insbesondere nebeneinander angeordnet. Vorzugsweise ist dem freien Bereich, insbesondere mittels der Fördermaschine oder Hilfsfördermaschine, ein Teil des durch die Austragsöffnung hindurch ausgetragenen Schüttguts zuführbar. Bevorzugt ist mittels des freien Bereichs und/oder über den freien Bereich, insbesondere seitlich des Schüttguttransportfahrzeugs, vorzugsweise auf dem oder einem, insbesondere seitlich des Schüttguttransportfahrzeugs gelegenen, Untergrund und/oder entlang der oder einer Strecke, das oder ein Schüttgutbett anhäufbar, auf welches insbesondere die abgewickelte Leitung, vorzugsweise entlang der Strecke, über oder durch die Leitungsführungsvorrichtung ablegbar ist. Somit ist es insbesondere möglich, in einem Arbeitsgang, vorzugsweise auf dem Untergrund, das oder ein Schüttgutbett anzuhäufen und auf dieses die abgewickelte Leitung abzulegen.

Bevorzugt ist am austragsöffnungsseitigen Ende des Schüttgutbehälters und/oder an der Austragskante und/oder an dem oder einem dem Schüttgutbehälter abgewandten Ende der Hilfsfördermaschine und/oder in dem freien Bereich eine zusätzliche Rutsche befestigt. Vorteilhaft ist der zusätzlichen Rutsche, insbesondere mittels der Fördermaschine oder Hilfsfördermaschine, ein Teil des durch die Austragsöffnung hindurch ausgetragenen Schüttguts zuführbar. Insbesondere ist beiden Rutschen das durch die Austragsöffnung hindurch ausgetragene Schüttgut oder ein Teil desselben zuführbar. Vorteilhaft ist mittels der zusätzlichen Rutsche das ihr zugeführte Schuttgut von dem Schüttgutbehälter oder der Hilfsfördermaschine, insbesondere in Förderrichtung der Fördermaschine oder Hilfsfördermaschine, wegführbar. Die beiden Rutschen sind quer zur Förderrichtung der Fördermaschine oder der Hilfsfördermaschine und/oder in Behälterquerrichtung insbesondere nebeneinander angeordnet. Bevorzugt ist die zusätzliche Rutsche in Förderrichtung der Fördermaschine oder der Hilfsfördermaschine ausgerichtet. Insbesondere sind die Rutschen quer zueinander ausgerichtet und/oder die zusätzliche Rutsche ist vorzugsweise quer zur Bedeckungsrutsche ausgerichtet. Vorteilhaft ist mittels der zusätzlichen Rutsche, insbesondere seitlich des Schüttguttransportfahrzeugs, vorzugsweise auf dem oder einem, insbesondere seitlich des Schüttguttransportfahrzeugs gelegenen, Untergrund und/oder entlang der oder einer Strecke, das oder ein Schüttgutbett anhäufbar, auf welches insbesondere die abgewickelte Leitung, vorzugsweise entlang der Strecke, über oder durch die Leitungsführungsvorrichtung ablegbar ist. Die zusätzliche Rutsche wird z.B. als Bettungsrutsche bezeichnet. Somit ist es insbesondere möglich, in einem Arbeitsgang, vorzugsweise auf dem Untergrund, das oder ein Schüttgutbett anzuhäufen und auf dieses die abgewickelte Leitung abzulegen.

Gemäß einer Ausgestaltung ist am austragsöffnungsseitigen Ende des Schüttgutbehälters und/oder an der Austragskante und/oder an einem dem Schüttgutbehälter abgewandten Ende der Hilfsfördermaschine eine Schnellwechseleinrichtung vorgesehen und/oder montiert. Bevorzugt sind an der Schnellwechseleinrichtung, vorzugsweise wahlweise, unterschiedliche Baugruppen montierbar. Die Baugruppen sind oder umfassen z.B. die Hilfsfördermaschine und/oder eine zusätzliche Fördermaschine und/oder eine Bunkerklappe und/oder eine oder wenigstens eine Schüttrutsche und/oder die oder die wenigstens eine Rutsche oder die Rutschen. Beispielsweise ist oder sind an der Schnellwechseleinrichtung, vorzugsweise wahlweise, die Hilfsfördermaschine und/oder die oder eine zusätzliche Fördermaschine und/oder die oder eine Bunkerklappe und/oder die oder die wenigstens eine oder eine oder wenigstens eine Schüttrutsche und/oder die oder die wenigstens eine Rutsche oder die Rutschen montiert oder montierbar. Die zusätzliche Fördermaschine umfasst oder bildet bevorzugt einen oder wenigstens einen Gurtförderer und/oder die zusätzliche Fördermaschine ist z.B. durch einen oder wenigstens einen Gurtförderer gebildet. Beispielsweise ist die zusätzliche Fördermaschine die Hilfsfördermaschine oder durch diese gebildet. Die oder die wenigstens eine Schüttrutsche kann z.B. eine beliebige Länge aufweisen. Beispielsweise ist die oder die wenigstens eine Schüttrutsche die oder die wenigstens eine Rutsche oder durch diese gebildet. Der Ausdruck Schüttrutsche kann z.B. durch den Ausdruck Schüttgutrutsche oder Rutsche ersetzt werden.

Die Erfindung betrifft insbesondere ferner ein Verfahren zum Auftragen von Schüttgut auf einen Untergrund entlang einer Strecke mittels eines erfindungsgemäßen Schüttguttransportfahrzeugs, wobei
- in dem oder den Laderaum des Schüttgutbehälters Schüttgut oder das Schüttgut vorgesehen und/oder eingebracht wird,
- das Schüttguttransportfahrzeug, vorzugsweise anschließend, im Bereich des Untergrunds positioniert wird,
- der Schüttgutbehälter, vorzugsweise anschließend, um die Hochachse in die oder eine Austragsstellung gedreht wird, in welcher insbesondere die Förderrichtung der Fördermaschine quer oder schräg zur Fahrtrichtung und/oder quer oder schräg zur Fahrzeuglängsrichtung und/oder quer oder schräg zur Fahrzeuglängsachse des Schüttguttransportfahrzeugs verläuft, und, vorzugsweise anschließend,
- in der Austragsstellung des Schüttgutbehälters mittels der Fördermaschine das in dem oder den Laderaum vorgesehene und/oder eingebrachte Schüttgut, insbesondere in Richtung der Austragsöffnung, gefördert und durch die Austragsöffnung hindurch, insbesondere aus dem Schüttgutbehälter, ausgetragen wird, sodass das Schüttgut auf den Untergrund aufgetragen wird, während das Schüttguttransportfahrzeug entlang der Strecke fährt und/oder, insbesondere mittels des Fahrzeugantriebs, bewegt wird.

Das erfindungsgemäße Verfahren kann gemäß allen im Zusammenhang mit dem erfindungsgemäßen Schüttguttransportfahrzeug erläuterten Ausgestaltungen weitergebildet werden. Insbesondere können im Rahmen der Beschreibung des Schüttguttransportfahrzeugs verwendete Eigenschaftsformen, wie z.B. "ist oder sind steuerbar" durch entsprechende Tätigkeitsformen, wie z.B. "wird oder werden gesteuert" ersetzt werden. Ferner kann das erfindungsgemäße Schüttguttransportfahrzeug gemäß allen im Zusammenhang mit dem erfindungsgemäßen Verfahren erläuterten Ausgestaltungen weitergebildet sein.

Das Positionieren des Schüttguttransportfahrzeugs im Bereich des Untergrunds bedeutet insbesondere, dass das Schüttguttransportfahrzeug neben dem oder auf dem Untergrund positioniert wird.

Das Vorsehen und/oder Einbringen des Schüttguts in den Laderaum des Schüttgutbehälters erfolgt vorzugsweise in der oder einer Neutralstellung und/oder in der oder einer Beladestellung des Schüttgutbehälters. Durch das Drehen des Schüttgutbehälters um die Hochachse in die oder eine Austragsstellung wird die Austragsöffnung und/oder das oder ein dem Schüttgutbehälter abgewandte Ende der Hilfsfördermaschine bevorzugt oberhalb des Untergrunds positioniert. Das Drehen des Schüttgutbehälters um die Hochachse in die oder eine Austragsstellung erfolgt vorzugsweise von der oder einer Neutralstellung und/oder von der oder einer Beladestellung des Schüttgutbehälters aus.

Bevorzugt wird die Fördergeschwindigkeit der Fördermaschine, insbesondere mittels der Steuervorrichtung, in Abhängigkeit von der Fahrgeschwindigkeit des Schüttguttransportfahrzeugs gesteuert. Vorteilhaft wird, insbesondere dazu, vorzugsweise mittels der Fahrgeschwindigkeitserfassungsvorrichtung, die Fahrgeschwindigkeit erfasst.

Bevorzugt wird, insbesondere mittels der Steuervorrichtung, die Fördergeschwindigkeit in Abhängigkeit von der in den Laderaum eingebrachten Schüttgutmenge gesteuert oder zusätzlich gesteuert. Vorteilhaft wird dazu, vorzugsweise mittels der Beladungszustanderfassungsvorrichtung, die in den Laderaum eingebrachte Schüttgutmenge erfasst. Bevorzugt wird dazu, vorzugsweise mittels der Waage der Beladungszustanderfassungsvorrichtung, das Gewicht des in den Laderaum eingebrachten Schüttguts erfasst.

Bevorzugt wird, insbesondere mittels der Steuervorrichtung, die Fördergeschwindigkeit in Abhängigkeit von der Schüttgutmenge im Bereich der Austragöffnung gesteuert oder zusätzlich gesteuert. Vorteilhaft wird dazu, vorzugsweise mittels der Schüttgutmengenerfassungsvorrichtung, die Schüttgutmenge im Bereich der Austragöffnung erfasst. Bevorzugt wird dazu, vorzugsweise mittels der Waage der Schüttgutmengenerfassungsvorrichtung, das Gewicht des Schüttguts im Bereich der Austragöffnung erfasst.

Bevorzugt wird, insbesondere mittels der Leitungsführungsvorrichtung, die oder eine, insbesondere von der oder einer Leitungsrolle abgewickelte, Leitung, insbesondere seitlich des Schüttguttransportfahrzeugs, vorzugsweise auf dem oder einem, insbesondere seitlich des Schüttguttransportfahrzeugs gelegenen, Untergrund oder Schüttgutbett und/oder entlang der Strecke, abgelegt, wonach, insbesondere mittels der Rutsche oder Bedeckungsrutsche, die abgelegte Leitung, vorzugsweise entlang der Strecke, mit Schüttgut bedeckt wird. Vorteilhaft wird, insbesondere mittels des freien Bereichs oder über den freien Bereich und/oder mittels der zusätzlichen Rutsche oder Bettungsrutsche, insbesondere seitlich des Schüttguttransportfahrzeugs, vorzugsweise auf dem, insbesondere seitlich des Schüttguttransportfahrzeugs gelegenen, Untergrund und/oder entlang der Strecke, das oder ein Schüttgutbett angehäuft, auf welches insbesondere die abgewickelte Leitung, insbesondere mittels der Leitungsführungsvorrichtung, vorzugsweise entlang der Strecke, abgelegt wird.

Die Erfindung betrifft insbesondere ferner die Verwendung des erfindungsgemäßen Schüttguttransportfahrzeugs zur durch Durchführung des erfindungsgemäßen Verfahrens.

Die Erfindung wird nachfolgend anhand bevorzugter Ausführungsformen unter Bezugnahme auf die Zeichnung beschrieben. In der Zeichnung zeigen:
Fig. 1 eine Seitenansicht eines Schüttguttransportfahrzeugs gemäß einer ersten Ausführungsform,
Fig. 2 eine Vorderansicht des Schüttguttransportfahrzeugs gemäß der ersten Ausführungsform,
Fig. 3 eine perspektivische Ansicht eines Schüttgutbehälters des Schüttguttransportfahrzeugs gemäß der ersten Ausführungsform,
Fig. 4 ein schematisches Blockschaltbild einer Steuervorrichtung zum Steuern einer Fördermaschine des Schüttguttransportfahrzeugs gemäß der ersten Ausführungsform,
Fig. 5 eine Seitenansicht eines Schüttguttransportfahrzeugs gemäß einer zweiten Ausführungsform,
Fig. 6 eine schematische Seitenansicht eines Schüttgutbehälters eines Schüttguttransportfahrzeugs gemäß einer dritten Ausführungsform und
Fig. 7 eine Seitenansicht eines Schüttguttransportfahrzeugs gemäß einer vierten Ausführungsform.

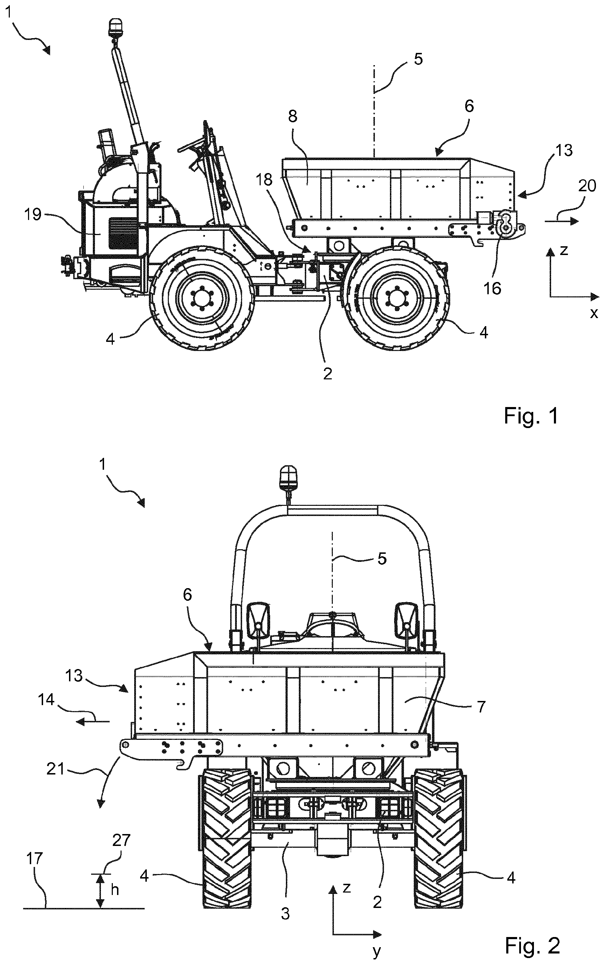

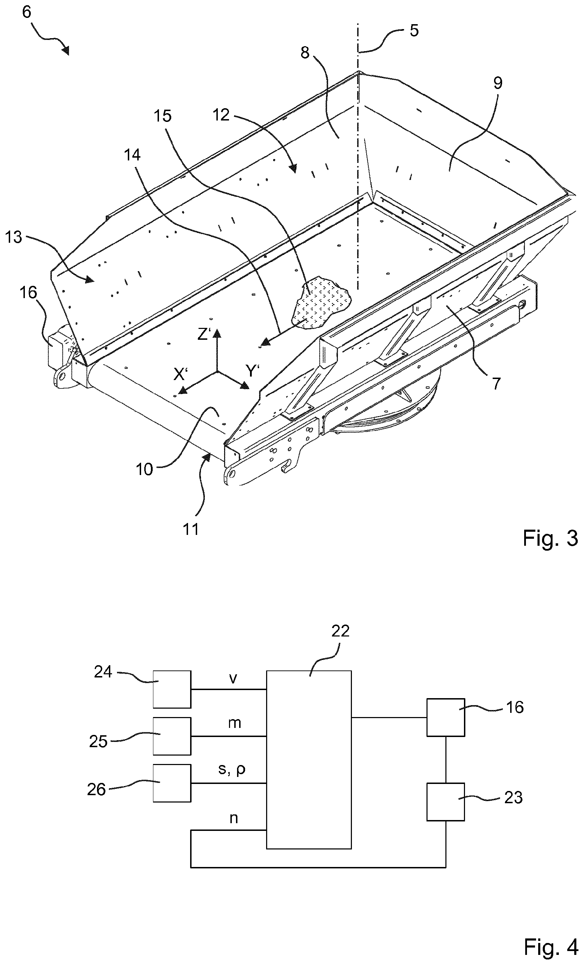

Aus Fig. 1 ist eine Seitenansicht eines Schüttguttransportfahrzeugs 1 gemäß einer ersten Ausführungsform ersichtlich. Ferner zeigt Fig. 2 eine Vorderansicht des Schüttguttransportfahrzeugs 1. Das Schüttguttransportfahrzeug 1 weist ein Fahrgestell 2, ein mit dem Fahrgestell 2 verbundenes Fahrwerk, welches zwei Fahrzeugachsen 3 und vier Fahrzeugräder 4 umfasst, und einen an dem Fahrgestell 2 um eine Hochachse 5 drehbar gelagerten Schüttgutbehälter 6 auf, der mittels eines Behälterdrehantriebs 18 um die Hochachse 5 drehbar ist und in perspektivischer Ansicht aus Fig. 3 ersichtlich ist.

Dem Schüttguttransportfahrzeug 1 sind eine Fahrzeuglängsrichtung x, eine quer zu dieser verlaufende Fahrzeugquerrichtung y und eine quer zur Fahrzeuglängsrichtung x und quer zur Fahrzeugquerrichtung y verlaufende Fahrzeughochrichtung z zugeordnet, die in Richtung der Hochachse 5 verläuft. Die Fahrtrichtung 20 des Schüttguttransportfahrzeug 1 verläuft in Fahrzeuglängsrichtung x, wobei es sich bei dieser Fahrtrichtung insbesondere um die, vorzugsweise gewöhnliche, Vorwärtsfahrtrichtung des Schüttguttransportfahrzeug 1 handelt. Das Schüttguttransportfahrzeug 1 weist einen Fahrzeugantrieb 19 auf, mittels welchem das Schüttguttransportfahrzeug 1 antreibbar ist.

Der Schüttgutbehälter 6 weist zwei einander gegenüberliegende Seitenwände 7 und 8 und eine quer zu diesen verlaufende Stirnwand 9 auf. Ferner weist der Schüttgutbehälter 6 einen Behälterboden auf, der durch den Fördergurt 10 einer als Gurtförderer ausgebildeten Fördermaschine 11 gebildet ist. Die Behälterwände 7, 8 und 9 sowie der Behälterboden begrenzen einen Behälterinnenraum, der einen Laderaum 12 des Schüttgutbehälters 6 bildet. Der Fördergurt 10 bildet somit einen Laderaumboden des Laderaums 12.

Der Schüttgutbehälter 6 ist in Richtung der Hochachse 5 und/oder nach oben hin offen und mit einer der Stirnwand 9 gegenüberliegenden Austragsöffnung 13 versehen, die sich zwischen den der Stirnwand 9 abgewandten Enden der Seitenwände 7 und 8 erstreckt. Die Austragsöffnung 13 ist somit durch diese Seitenwandenden und den Fördergurt 10 begrenzt. Dem Schüttgutbehälter 6 ist eine Behälterlängsrichtung x' zugeordnet, in welcher sich auch die Seitenwände 7 und 8 erstrecken. Ferner ist dem Schüttgutbehälter 6 eine quer zur Behälterlängsrichtung x' verlaufende Behälterquerrichtung y' zugeordnet, in welcher die Seitenwände 7 und 8 einander gegenüberliegen. Insbesondere erstreckt oder erstrecken sich die Stirnwand 9 und/oder die Austragsöffnung 13, vorzugsweise jeweils, in Behälterquerrichtung y'. Auch ist dem Schüttgutbehälter 6 eine quer zur Behälterlängsrichtung x' und quer zur Behälterquerrichtung y' verlaufende Behälterhochrichtung z' zugeordnet, die in Richtung der Hochachse 5 verläuft.

Der Fördermaschine 11 ist eine in Behälterlängsrichtung x' verlaufende Förderrichtung 14 zugeordnet, in welcher in den Laderaum 12 eingebrachtes und lediglich schematisch angedeutetes Schüttgut 15 mittels der Fördermaschine 11 in Richtung der Austragsöffnung 13 förderbar und durch diese hindurch aus dem Schüttgutbehälter 6 austragbar ist. Die Fördermaschine 11 weist einen Fördermaschinenantrieb 16 auf, mittels welchem die Fördermaschine 11 antreibbar und somit der Fördergurt 10 bewegbar ist. Insbesondere ist der den Laderaumboden bildende Teil des Fördergurts 10 in Förderrichtung 14 bewegbar.

Zum Auftragen von Schüttgut 15 auf einen Untergrund 17 entlang einer Strecke mittels des Schüttguttransportfahrzeugs 1 wird zunächst Schüttgut 15 in den Laderaum 12 des Schüttgutbehälters 6 eingebracht, wobei der Schüttgutbehälter 6 bezüglich der Hochachse 5 insbesondere in einer aus Fig. 1 ersichtlichen Neutralstellung orientiert ist. Anschließend wird das Schüttguttransportfahrzeug 1 neben dem Untergrund 17 positioniert und der Schüttgutbehälter 6 um die Hochachse 5 von der Neutralstellung in eine aus Fig. 2 ersichtliche Austragsstellung gedreht, in welcher die Förderrichtung 14 der Fördermaschine 11 quer zur Fahrzeuglängsrichtung x und/oder zur Fahrtrichtung 20 verläuft. Anschließend wird mittels der Fördermaschine 11 das in den Laderaum 12 eingebrachte Schüttgut 15 in Richtung der Austragsöffnung 13 gefördert und durch diese hindurch aus dem Schüttgutbehälter 6 ausgetragen, sodass das Schüttgut 15 in Richtung des Pfeils 21 von dem Schüttgutbehälter 6 herunterfällt und auf den Untergrund 17 aufgetragen wird, während das Schüttguttransportfahrzeug 1 entlang der Strecke fährt und/oder mittels des Fahrzeugantriebs 19 bewegt wird.

In der Neutralstellung des Schüttgutbehälters 6 verläuft die Behälterlängsrichtung x' in Fahrzeuglängsrichtung x. Ferner verläuft in der Neutralstellung des Schüttgutbehälters 6 die Behälterquerrichtung y' in Fahrzeugquerrichtung y. In der Austragsstellung des Schüttgutbehälters 6 verläuft die Behälterlängsrichtung x' quer zur Fahrzeuglängsrichtung x. Ferner verläuft in der Austragsstellung des Schüttgutbehälters 6 die Behälterquerrichtung y' in Fahrzeuglängsrichtung x.

Aus Fig. 4 ist ein schematisches Blockschaltbild einer Steuervorrichtung 22 des Schüttguttransportfahrzeugs 1 ersichtlich, die mit dem Fördermaschinenantrieb 16 verbunden ist, an dem ein mit der Steuervorrichtung 22 verbundenes Drehzahlmessgerät 23 angeschlossen ist, mittels welchem die Drehzahl n des als rotatorischer Antrieb ausgebildeten Fördermaschinenantriebs 16 erfassbar ist. Die Drehzahl n bildet ein Maß für die Fördergeschwindigkeit der Fördermaschine 11. Ferner ist die Steuervorrichtung 22 mit einem Fahrgeschwindigkeitsmessgerät 24 verbunden ist, mittels welcher die Fahrgeschwindigkeit v des Schüttguttransportfahrzeugs 1 erfassbar ist. Bevorzugt ist die Steuervorrichtung 22 zusätzlich mit einer Schüttgutmengenerfassungsvorrichtung 25 verbunden, mittels welcher die Schüttgutmenge m im Bereich der Austragöffnung 13 erfassbar ist. Die Schüttgutmengenerfassungsvorrichtung 25 umfasst z.B. eine Waage, sodass die Schüttgutmenge m im Bereich der Austragöffnung 13 durch das Gewicht des Schüttguts 15 im Bereich der Austragsöffnung 13 repräsentiert wird. Vorteilhaft ist die Steuervorrichtung 22 ferner mit einer Eingabevorrichtung 26 verbunden, in die ein oder mehrere Vorgabewerte eingebbar sind, der oder die mittels der Eingabevorrichtung 26 der Steuervorrichtung 22 zuführbar sind. Die Vorgabewerte umfassen z.B. einen Höhen-Vorgabewert s und/oder einen oder mehrere Schüttgutbeschaffenheits-Vorgabewerte p. Der oder die Schüttgutbeschaffenheits-Vorgabewerte p beschreiben die Beschaffenheit des Schüttguts 15 und umfassen z.B. die Dichte und/oder die Rieselfähigkeit des Schüttguts 15 und/oder einen das Anhäufungsverhalten des Schüttguts 15 charakterisierenden Anhäufungsparameter. Alternativ sind z.B. ein oder mehrere die Schüttgutbeschaffenheit charakterisierende Werte bereits in der Steuervorrichtung 22 hinterlegt. In diesem Fall kann eine Eingabe des oder der Schüttgutbeschaffenheits-Vorgabewerte z.B. entfallen oder lediglich einen Auswahlwert für das Schüttgut aus einer Mehrzahl von unterschiedlichen Schüttgütern umfassen, deren Schüttgutbeschaffenheit bereits in der Steuervorrichtung 22 hinterlegt sind. Der Höhen-Vorgabewert s definiert die gewünschte Höhe h eines auf dem Untergrund 17 durch das durch die Austragsöffnung 13 hindurch ausgetragene Schüttgut 15 angehäuften Schüttguthaufens 27, der schematisch in Fig. 2 angedeutet ist.

Die Fördergeschwindigkeit der Fördermaschine 11 ist mittels der Steuervorrichtung 22 in Abhängigkeit von der Fahrgeschwindigkeit v und vorzugsweise auch in Abhängigkeit von der Schüttgutmenge m im Bereich der Austragöffnung 13 und/oder der Vorgabewerte s und/oder p derart steuerbar, dass durch das durch die Austragsöffnung 13 hindurch ausgetragene Schüttgut 15 auf dem Untergrund 17 ein Schüttguthaufen 27 entlang der Strecke 22 anhäufbar ist, wobei der Schüttguthaufen 27 vorzugsweise die Höhe h aufweist. Bevorzugt wird ferner die erfasste Drehzahl n berücksichtigt, was eine Regelung der Fördergeschwindigkeit ermöglicht.

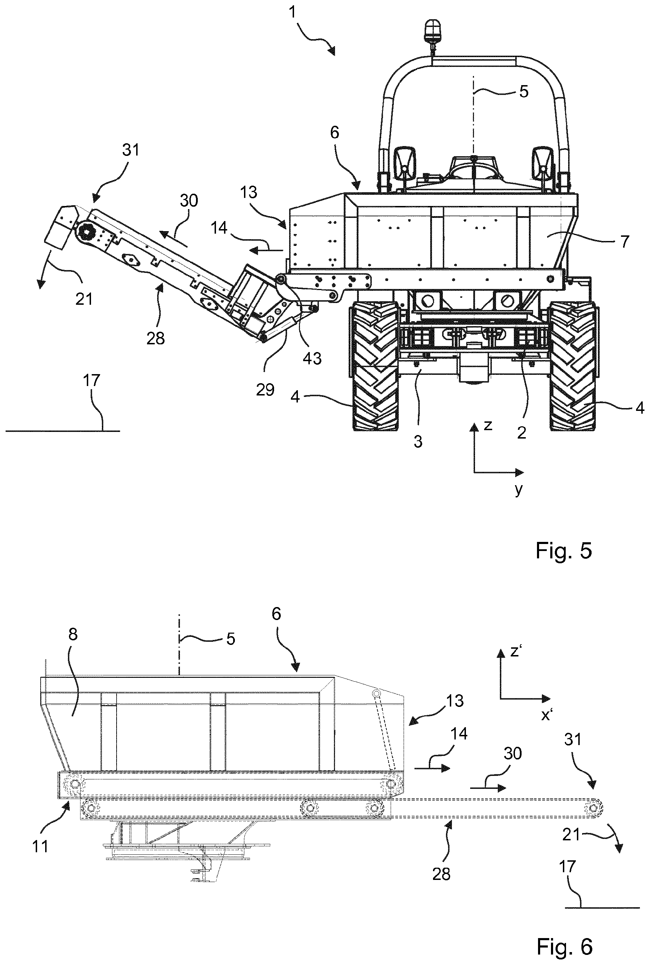

Aus Fig. 5 ist eine Seitenansicht eines Schüttguttransportfahrzeugs 1 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind.

Im Unterschied zur ersten Ausführungsform ist am austragsöffnungsseitigen Ende des Schüttgutbehälters 6 eine Hilfsfördermaschine 28 um eine in Behälterquerrichtung y' verlaufende Schwenkachse 43 schwenkbar gelagert. Mittels der Hilfsfördermaschine 28 ist das durch die Austragsöffnung 13 hindurch ausgetragene Schüttgut 15 aufnehmbar und bis zu einem dem Schüttgutbehälter 6 abgewandten Ende 31 der Hilfsfördermaschine 28 von dem Schüttgutbehälter 6 wegförderbar. Somit ist die Gesamtförderlänge für das Schüttgut 15 durch die Hilfsfördermaschine 28 über die Förderlänge der Fördermaschine hinaus verlängert. Die Förderrichtung 30 der Hilfsfördermaschine 28 ist gegenüber der Förderrichtung 14 der Fördermaschine in Richtung der Hochachse 5 geneigt. Diese Neigung bestimmt die Entfernung zwischen dem Ende 31 der Hilfsfördermaschine 28 und dem Schüttgutbehälter 6. Die Hilfsfördermaschine 28 ist mittels eines Positionierungsantriebs 29 um die Schwenkachse 43 schwenkbar, sodass mittels des Positionierungsantriebs 29 die Entfernung zwischen dem Ende 31 der Hilfsfördermaschine 28 und dem Schüttgutbehälter 6 einstellbar ist. An dem Ende 31 der Hilfsfördermaschine 28 fällt das Schüttgut in Richtung des Pfeils 21 von der Hilfsfördermaschine 28 herunter und wird auf den Untergrund 17 aufgetragen.

Die Hilfsfördermaschine 28 ist als Gurtförderer ausgebildet. Ferner ist die Fördergeschwindigkeit der Hilfsfördermaschine 28 mittels der Steuervorrichtung steuerbar.

Abgesehen von diesen Unterschieden stimmt das Schüttguttransportfahrzeug gemäß der zweiten Ausführungsform mit dem Schüttguttransportfahrzeug gemäß der ersten Ausführungsform überein oder im Wesentlichen überein, sodass zur weiteren Beschreibung der zweiten Ausführungsform auf die Beschreibung der ersten Ausführungsform verwiesen wird.

Aus Fig. 6 ist eine schematische Seitenansicht eines Schüttgutbehälters 6 eines Schüttguttransportfahrzeugs gemäß einer dritten Ausführungsform ersichtlich, wobei zu den vorherigen Ausführungsformen identische oder ähnliche Merkmale mit denselben Bezugszeichen wie bei den vorherigen Ausführungsformen bezeichnet sind.

Im Unterschied zu den vorherigen Ausführungsformen ist eine Hilfsfördermaschine 28 unterhalb der Fördermaschine 11 angeordnet und in Förderrichtung 14 der Fördermaschine 11 an dem Schüttgutbehälter 6 verschiebbar geführt. Mittels der Hilfsfördermaschine 28 ist das durch die Austragsöffnung 13 hindurch ausgetragene Schüttgut 15 aufnehmbar und bis zu einem dem Schüttgutbehälter 6 abgewandten Ende 31 der Hilfsfördermaschine 28 von dem Schüttgutbehälter 6 wegförderbar. Somit ist die Gesamtförderlänge für das Schüttgut 15 durch die Hilfsfördermaschine 28 über die Förderlänge der Fördermaschine 11 hinaus verlängerbar. Die Förderrichtung 30 der Hilfsfördermaschine 28 verläuft parallel zur Förderrichtung 14 der Fördermaschine 11. Die Hilfsfördermaschine 28 ist mittels eines Positionierungsantriebs verschiebbar, sodass mittels des

Positionierungsantriebs die Entfernung zwischen dem Ende 31 der Hilfsfördermaschine 28 und dem Schüttgutbehälter 6 einstellbar ist. An dem Ende 31 der Hilfsfördermaschine 28 fällt das Schüttgut 15 in Richtung des Pfeils 21 von der Hilfsfördermaschine 28 herunter und wird auf den Untergrund 17 aufgetragen.

Die Hilfsfördermaschine 28 ist als Gurtförderer ausgebildet. Ferner ist die Fördergeschwindigkeit der Hilfsfördermaschine 28 mittels der Steuervorrichtung steuerbar.

Abgesehen von diesen Unterschieden stimmt die dritte Ausführungsform mit den vorherigen Ausführungsformen überein oder im Wesentlichen überein, sodass zur weiteren Beschreibung der dritten Ausführungsform auf die Beschreibung der vorherigen Ausführungsformen verwiesen wird.

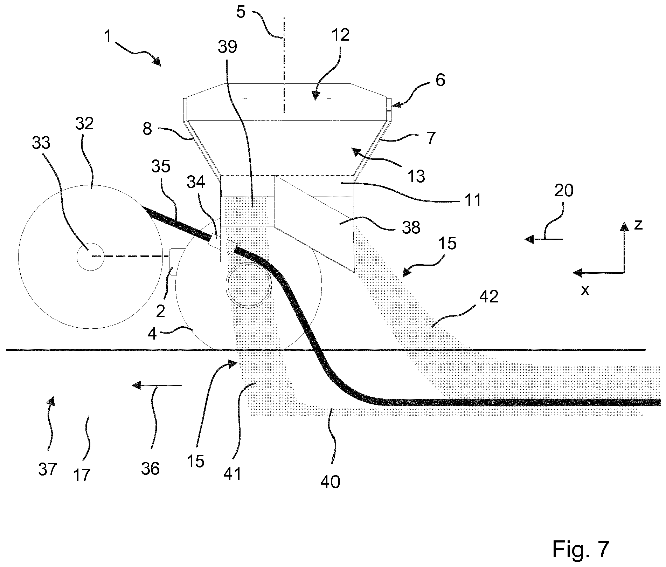

Aus Fig. 7 ist eine Seitenansicht eines Schüttguttransportfahrzeugs 1 gemäß einer vierten Ausführungsform ersichtlich, wobei zu den vorherigen Ausführungsformen identische oder ähnliche Merkmale mit denselben Bezugszeichen wie bei den vorherigen Ausführungsformen bezeichnet sind.

Im Unterschied zu den vorherigen Ausführungsformen sind ein eine bewickelte Leitungsrolle 32 tragender Rollenträger 33 und eine Leitungsführungsvorrichtung 34 vorgesehen, über oder durch welche von der Leitungsrolle 32 abgewickelte Leitung 35 seitlich des Schüttguttransportfahrzeugs 1 auf einem Untergrund 17 entlang einer Strecke 36 ablegbar ist, entlang welcher das Schüttguttransportfahrzeugs 1 fährt und/oder bewegt wird. Der Untergrund 17 bildet hier den Grund oder den Boden einer sich entlang der Strecke 36 erstreckenden Aufgrabung 37. Die Leitungsführungsvorrichtung 34 umfasst bevorzugt eine Buchse, durch welche die Leitung 35 hindurch geführt ist. Der Rollenträger 33 ist z.B. an dem Fahrgestell 2 oder an dem Schüttgutbehälter 6 befestigt. Die Leitungsführungsvorrichtung 34 ist z.B. an dem Schüttgutbehälter 6 oder an dem Fahrgestell 2 befestigt.

Am austragsöffnungsseitigen Ende des Schüttgutbehälters 6 ist eine Rutsche 38 befestigt, die quer zur Förderrichtung der Fördermaschine 11 ausgerichtet ist. Die Rutsche 38 erstreckt sich in einer quer zur Förderrichtung der Fördermaschine 11 verlaufenden Richtung lediglich über einen Teilbereich des austragsöffnungsseitigen Endes des Schüttgutbehälters 6, sodass dieses Ende einen von der Rutsche 38 freien Bereich 39 aufweist. Der Rutsche 38 und dem freien Bereich 39 ist somit jeweils ein Teil des durch die Austragsöffnung 13 hindurch ausgetragenen Schüttguts 15 zuführbar.

Der freie Bereich 39 und die Rutsche 38 sind quer zur Förderrichtung der Fördermaschine 11 nebeneinander angeordnet, wobei sich die Förderrichtung der Fördermaschine 11 in Fig. 7 insbesondere aus der Zeichenebene heraus erstreckt. Mittels des oder über den freien Bereich 39 ist auf dem Untergrund 17 entlang der Strecke 36 ein Schüttgutbett 40 anhäufbar, auf welches die abgewickelte Leitung 35 über oder durch die Leitungsführungsvorrichtung 34 entlang der Strecke 36 ablegbar ist. Ferner ist mittels der Rutsche 38 die abgelegte Leitung 35 entlang der Strecke 36 mit Schüttgut 15 bedeckbar. Die Rutsche 38 kann somit z.B. auch als Bedeckungsrutsche bezeichnet werden.

Mittels des durch die Austragsöffnung 13 hindurch ausgetragenen Schüttguts 15 sind somit zwei Schüttgutströme 41 und 42 erzeugbar, wobei mittels des über den freien Bereich 39 abgebbaren Schüttgutstroms 41 das Schüttgutbett 40 anhäufbar und mittels des von der Rutsche 38 abgegebenen Schüttgutstroms 42 die abgelegte Leitung 35 mit Schüttgut bedeckbar ist.

### Bezugszeichenliste

- 1: Schüttguttransportfahrzeug
- 2: Fahrgestell
- 3: Fahrzeugachse
- 4: Fahrzeugrad
- 5: Hochachse, Drehachse des Schüttgutbehälters
- 6: Schüttgutbehälter
- 7: Seitenwand des Schüttgutbehälters
- 8: Seitenwand des Schüttgutbehälters
- 9: Stirnwand des Schüttgutbehälters
- 10: Fördergurt / Laderaumboden
- 11: Fördermaschine / Gurtförderer
- 12: Laderaum
- 13: Austragsöffnung
- 14: Förderrichtung der Fördermaschine / des Fördergurts
- 15: Schüttgut
- 16: Fördermaschinenantrieb
- 17: Untergrund
- 18: Behälterdrehantrieb
- 19: Fahrzeugantrieb
- 20: Fahrtrichtung
- 21: Fallrichtung des Schüttguts
- 22: Steuervorrichtung
- 23: Drehzahlmessgerät
- 24: Fahrgeschwindigkeitsmessgerät
- 25: Schüttgutmengenerfassungsvorrichtung
- 26: Eingabevorrichtung
- 27: Schüttguthaufen
- 28: Hilfsfördermaschine
- 29: Positionierungsantrieb
- 30: Förderrichtung der Hilfsfördermaschine
- 31: Ende der Hilfsfördermaschine
- 32: Leitungsrolle
- 33: Rollenträger
- 34: Leitungsführungsvorrichtung
- 35: Leitung
- 36: Strecke
- 37: Aufgrabung
- 38: Rutsche
- 39: freier Bereich
- 40: Schüttgutbett
- 41: Schüttgutstrom
- 42: Schüttgutstrom
- 43: Schwenkachse
- x: Fahrzeuglängsrichtung
- y: Fahrzeugquerrichtung
- z: Fahrzeughochrichtung
- x': Behälterlängsrichtung
- y': Behälterquerrichtung
- z': Behälterhochrichtung
- h: Höhe des Schüttguthaufens / Vorgabewert
- m: Schüttgutmenge im Bereich der Austragöffnung
- n: Drehzahl des Fördermaschinenantriebs
- s: Höhen-Vorgabewert
- v: Fahrgeschwindigkeit des Schüttguttransportfahrzeugs
- p: Schüttgutbeschaffenheits-Vorgabewert

## Patentansprüche

1. Schüttguttransportfahrzeug mit einem Fahrgestell (2), einem mit diesem verbundenen Fahrwerk und einem an dem Fahrgestell (2) um eine Hochachse (5) drehbar gelagerten Schüttgutbehälter (6), der einen Laderaum (12) zur Aufnahme von Schüttgut (15) und eine Austragsöffnung (13) zum Austragen des Schüttguts (15) aufweist, **dadurch gekennzeichnet, dass** der Schüttgutbehälter (6) eine Fördermaschine (11) aufweist, mittels welcher das Schüttgut (15) förderbar und durch die Austragsöffnung (13) hindurch austragbar ist.

2. Schüttguttransportfahrzeug nach Anspruch 1, **gekennzeichnet durch** eine mit der Fördermaschine (11) verbundene Steuervorrichtung (22), die mit einer Fahrgeschwindigkeitserfassungsvorrichtung (24) verbunden ist, mittels welcher die Fahrgeschwindigkeit (v) des Schüttguttransportfahrzeugs (1) erfassbar ist, sodass mittels der Steuervorrichtung (22) die Fördergeschwindigkeit der Fördermaschine (11) in Abhängigkeit von der Fahrgeschwindigkeit (v) steuerbar ist.

3. Schüttguttransportfahrzeug nach Anspruch 2, **dadurch gekennzeichnet, dass** die Steuervorrichtung (22) mit einer Schüttgutmengenerfassungsvorrichtung (25) verbunden ist, mittels welcher die Schüttgutmenge (m) im Bereich der Austragöffnung (13) erfassbar ist, sodass mittels der Steuervorrichtung (22) die Fördergeschwindigkeit zusätzlich in Abhängigkeit von der Schüttgutmenge im Bereich der Austragöffnung (13) steuerbar ist.

4. Schüttguttransportfahrzeug nach einem der vorangehenden Ansprüche, **dadurch gekennzeichnet, dass** die Fördermaschine (11) einen Gurtförderer umfasst, dessen Fördergurt (10) einen Laderaumboden des Laderaums (12) bildet.

5. Schüttguttransportfahrzeug nach einem der vorangehenden Ansprüche, **gekennzeichnet durch** eine am Fahrgestell (2) oder am Schüttgutbehälter (6) gelagerte oder geführte Hilfsfördermaschine (28), mittels welcher das durch die Austragsöffnung (13) hindurch ausgetragene Schüttgut (15) aufnehmbar und von dem Schüttgutbehälter (6) wegförderbar ist.

6. Schüttguttransportfahrzeug nach Anspruch 5, **dadurch gekennzeichnet, dass** die Hilfsfördermaschine (28) unterhalb der Fördermaschine (11) angeordnet und in Förderrichtung (14) der Fördermaschine (11) verschiebbar geführt ist.

7. Schüttguttransportfahrzeug nach einem der vorangehenden Ansprüche, **dadurch gekennzeichnet, dass** am austragsöffnungsseitigen Ende des Schüttgutbehälters (6) oder an einem dem Schüttgutbehälter (6) abgewandten Ende der Hilfsfördermaschine (28) wenigstens eine Rutsche (38) befestigt ist, welcher das durch die Austragsöffnung (13) hindurch ausgetragene Schüttgut (15) oder ein Teil desselben zuführbar ist.

8. Schüttguttransportfahrzeug nach Anspruch 7, **gekennzeichnet durch** einen Rollenträger (33) für eine Leitungsrolle (32) und eine Leitungsführungsvorrichtung (34), über oder durch welche von der Leitungsrolle (32) abgewickelte Leitung (35) auf einem Untergrund oder Schüttgutbett (40) ablegbar ist, wobei mittels der Rutsche (38) die abgelegte Leitung (35) mit Schüttgut (15) bedeckbar ist.

9. Schüttguttransportfahrzeug nach Anspruch 8, **dadurch gekennzeichnet, dass** das austragsöffnungsseitige Ende des Schüttgutbehälters (6) oder das dem Schüttgutbehälter (6) abgewandte Ende der Hilfsfördermaschine (28) einen von der Rutsche (38) freien Bereich (39) aufweist, über welchen auf einem Untergrund (17) das Schüttgutbett (40) anhäufbar ist, auf welches die abgewickelte Leitung (35) über oder durch die Leitungsführungsvorrichtung (34) ablegbar ist.

10. Schüttguttransportfahrzeug nach einem der vorangehenden Ansprüche, **dadurch gekennzeichnet, dass** am austragsöffnungsseitigen Ende des Schüttgutbehälters (6) eine Schnellwechseleinrichtung vorgesehen ist, an der eine zusätzliche Fördermaschine oder eine Bunkerklappe oder wenigstens eine Schüttrutsche montierbar ist.

11. Verfahren zum Auftragen von Schüttgut auf einen Untergrund entlang einer Strecke mittels eines Schüttguttransportfahrzeugs nach einem der vorangehenden Ansprüche, wobei
- in den Laderaum (12) des Schüttgutbehälters (6) Schüttgut (15) eingebracht wird,
- das Schüttguttransportfahrzeug (1) im Bereich des Untergrunds (17) positioniert wird,
- der Schüttgutbehälter (6) um die Hochachse (5) in eine Austragsstellung gedreht wird und
- in der Austragsstellung des Schüttgutbehälters (6) mittels der Fördermaschine (11) das in den Laderaum (12) eingebrachte Schüttgut (15) gefördert und durch die Austragsöffnung (13) hindurch ausgetragen wird, sodass das Schüttgut (15) auf den Untergrund (17) aufgetragen wird, während das Schüttguttransportfahrzeug (1) entlang der Strecke (36) fährt oder bewegt wird.

12. Verfahren nach Anspruch 11, **dadurch gekennzeichnet, dass** die Fördergeschwindigkeit der Fördermaschine (11) in Abhängigkeit von der Fahrgeschwindigkeit (v) des Schüttguttransportfahrzeugs (1) gesteuert wird.
